# EUROPEAN PATENT APPLICATION

(11) **EP 3 979 683 A1**
(43) Date of publication of application: **06.04.2022**
(21) Application number: 20827869.7
(22) Date of filing: 15.06.2020
(51) Int. Cl.: H04W 12/12

(54) **METHOD, DEVICE AND SYSTEM FOR DETERMINING FALSE BASE STATION**

(30) Priority: 17.06.2019 CN 201910523826
(71) Applicant: Huawei Technologies Co., Ltd., Longgang District Shenzhen, Guangdong 518129 (CN)
(72) Inventor: GUO, Longhua, Shenzhen, Guangdong 518129 (CN); HU, Li, Shenzhen, Guangdong 518129 (CN); JIN, Yinghao, Shenzhen, Guangdong 518129 (CN); JIN, Wenjun, Shenzhen, Guangdong 518129 (CN)
(74) Representative: Pfenning, Meinig & Partner mbB
(86) International application number: PCT/CN2020/096228
(87) International publication number: WO 2020/253661

(57) **Abstract**

This application relates to the field of communications technologies, and discloses a false base station determining method, apparatus, and system, to provide a false base station determining manner. The method includes: A real base station receives a first uplink NAS message and an identifier of a first device. The real base station obtains a first hash value of first system information of a cell corresponding to the identifier of the first device. The real base station sends an N2 message to a core network device, where the N2 message includes the first uplink NAS message and the first hash value of the first system information. The core network device receives the N2 message sent by the real base station, and sends a first downlink NAS message that is integrity protected to a terminal, where the first downlink NAS message is forwarded by the real base station to the terminal, and the first downlink NAS message includes the first hash value of the first system information. The first hash value is transferred by using the first downlink NAS message that is integrity protected, so that the terminal may determine whether the terminal accesses a false base station.

## Description

### CROSS-REFERENCE TO RELATED APPLICATIONS

This application claims priority to Chinese Patent Application No. 201910523826.9, filed with the China National Intellectual Property Administration on June 17, 2019 and entitled "FALSE BASE STATION DETERMINING METHOD AND APPARATUS", which is incorporated herein by reference in its entirety.

### TECHNICAL FIELD

Embodiments of this application relate to the field of wireless communications, and in particular, to a false base station determining method, apparatus, and system.

### BACKGROUND

Because a quantity of terminals gradually increases with development of communications technologies, more base stations are deployed to implement better communication.

An attacker may deploy a false base station (false base station, FBS) to intercept a user message and steal user data (such as bank card information and ID card information of a user). The false base station has better signal quality, so that a terminal may be attracted to access the false base station. Once the terminal accesses the false base station, the false base station may initiate a denial of service (denial of service, DoS) attack on the terminal, resulting in theft of user data.

It should be noted that, after the terminal accesses the false base station, the false base station simulates a real base station to intercept an uplink message sent by the terminal to the real base station. If the uplink message is not integrity protected, the false base station may send the uplink message to the real base station after changing content of the uplink message. The false base station may further simulate a real terminal to intercept a downlink message sent by a real base station to the terminal. If the downlink message is not integrity protected, the false base station may send the downlink message to the terminal after changing content of the downlink message.

To ensure communication security, how to determine a false base station is an urgent problem to be resolved.

### SUMMARY

Embodiments of this application provide a false base station determining method, apparatus, and system, to provide a false base station determining manner.

According to a first aspect, a false base station determining method is provided. A base station receives a first uplink NAS message and an identifier of a first device. If a terminal accesses a false base station, the identifier of the first device is an identifier allocated by the base station to the false base station; if a terminal does not access a false base station, the identifier of the first device is an identifier allocated by the base station to the terminal. The base station may obtain an identifier of a cell corresponding to the identifier of the first device, and may further obtain a first hash value of first system information corresponding to the identifier of the cell. Then, the base station sends an N2 message to a core network device, where the N2 message includes the first uplink NAS message and the first hash value of the first system information. Correspondingly, the core network device receives the N2 message sent by the base station. Then, the core network device sends a first downlink NAS message that is integrity protected to the first device, where the first downlink NAS message is forwarded by the base station to the first device. Specifically, the base station receives the first downlink NAS message that is integrity protected and that is sent by the core network device, and sends the first downlink NAS message to the first device, where the first downlink NAS message includes the first hash value of the first system information. Particularly, when the false base station exists, the false base station further forwards the first downlink NAS message to the terminal.

Specifically, the terminal receives system information, and measures signal quality of a cell corresponding to the system information. If the signal quality meets a cell access condition, the terminal accesses, based on the received system information, the cell corresponding to the system information. After the terminal accesses the cell, the terminal first establishes a connection to the accessed cell, and then establishes a connection to the core network device. When the terminal establishes the connection to the core network device, the terminal may send the first uplink NAS message to the core network device by using the base station. When sending the first uplink NAS message, the terminal may further send an identifier allocated to the terminal by a base station to which the terminal currently accesses. If the terminal accesses the false base station, the false base station receives the first uplink NAS message and an identifier allocated by the false base station to the terminal. The false base station modifies the identifier allocated by the false base station to the terminal into an identifier allocated by a real base station to the false base station, and sends, to the real base station, the first uplink NAS message and the identifier allocated by the real base station to the false base station.

The terminal accesses a corresponding cell based on the system information. After the terminal sends the first uplink NAS message to the core network device by using the currently accessed cell, the core network device sends a hash value of system information of the real base station to the terminal by using the first downlink NAS message that is integrity protected. Because the false base station cannot change a NAS message that is integrity protected, the terminal may determine, by using a first hash value of first system information carried in the NAS message that is integrity protected, whether the terminal accesses the false base station.

In a possible implementation, the first downlink NAS message may be, for example, a NAS security mode command message, or any downlink NAS message that is integrity protected after NAS security activation.

In a possible implementation, that the terminal determines, based on the first hash value of the first system information, whether the terminal accesses the false base station may specifically include: The terminal determines a second hash value of second system information of a cell accessed by the terminal. The terminal determines whether the first hash value of the first system information is consistent with the second hash value of the second system information; and if the first hash value of the first system information is consistent with the second hash value of the second system information, determines that the terminal does not access the false base station; or if the first hash value of the first system information is inconsistent with the second hash value of the second system information, determines that the terminal accesses the false base station.

In a possible implementation, when determining that the terminal accesses the false base station, the terminal sends a second uplink NAS message that is integrity protected to the core network device, where the second uplink NAS message includes indication information used to indicate that the terminal accesses the false base station. For example, the second uplink NAS message may include system-related information of a cell currently accessed by the terminal. Specifically, the system-related information of the cell currently accessed by the terminal may be system information corresponding to the cell currently accessed by the terminal (that is, the second system information sent by the false base station to the terminal) or a hash value of system information corresponding to the cell currently accessed by the terminal.

The terminal reports system-related information of the false base station to the core network device by using an uplink NAS message that is integrity protected. The false base station cannot modify the NAS message that is integrity protected. The core network device may monitor the false base station based on system-related information that is of a cell of the false base station and is in the uplink NAS message that is integrity protected.

In a possible implementation, when determining that the terminal accesses the false base station, the terminal may reselect a cell to perform access. Specifically, the terminal may directly reselect a cell to perform access, or may reselect, based on the first system information, a cell to perform access. The terminal may measure signal strength based on the first system information, and determine, based on the signal strength, whether the terminal accesses a corresponding cell. Because the first system information is the system information of the real base station, when the false base station exists around the terminal, the terminal can be prevented from being connected to the false base station again.

In a possible implementation, when determining that the terminal accesses the false base station, the terminal sends the second uplink NAS message that is integrity protected to the core network device, where the second uplink NAS message includes indication information used to indicate to obtain the first system information. After the core network device receives the second uplink NAS message that is integrity protected, the core network device sends a system information obtaining request to the base station, where the system information obtaining request includes the indication information used to indicate to obtain the first system information. For example, the indication information used to indicate to obtain the first system information is the first hash value. Correspondingly, the base station receives the system information obtaining request sent by the core network device, and obtains the first system information based on the indication information used to indicate to obtain the first system information. The base station sends the first system information to the core network device. The core network device receives the first system information sent by the base station, and sends a second downlink NAS message that is integrity protected to the terminal, where the second downlink NAS message includes the first system information. The terminal performs integrity verification on the received second downlink NAS message, and reselects, based on the first system information in the second downlink NAS message, a cell to perform access after the verification succeeds.

The core network device delivers, to the terminal by using a downlink NAS message that is integrity protected, first system information broadcast by the real base station, and the false base station cannot change the first system information in the downlink NAS message that is integrity protected. The terminal reselects, based on the first system information, a cell to perform access, so that a possibility of re-accessing a cell of the false base station can be reduced, and a possibility of accessing a cell of the real base station can be increased.

In a possible implementation, the first uplink NAS message is a NAS service request message or a NAS registration request message.

According to a second aspect, a false base station determining method is provided. A base station receives a first uplink NAS message and an identifier of a first device. If a terminal accesses a false base station, the identifier of the first device is an identifier allocated by the base station to the false base station; if a terminal does not access a false base station, the identifier of the first device is an identifier allocated by the base station to the terminal. The base station may obtain an identifier of a cell corresponding to the identifier of the first device. Then, the base station obtains first system information corresponding to the identifier of the cell. Then, the base station sends an N2 message to a core network device, where the N2 message includes the first uplink NAS message and the first system information. Correspondingly, the core network device receives the N2 message sent by the base station, and calculates a first hash value of the first system information. Then, the core network device sends a first downlink NAS message that is integrity protected to the terminal, where the first downlink NAS message is forwarded by the base station to the terminal. Specifically, the base station receives the first downlink NAS message that is integrity protected and that is sent by the core network device, and sends the first downlink NAS message to the first device, where the first downlink NAS message includes the first hash value of the first system information.

Specifically, the terminal receives system information, and measures signal quality of a cell corresponding to the system information. If the signal quality meets a cell access condition, the terminal accesses, based on the system information, the cell corresponding to the system information. After the terminal accesses the cell, the terminal first establishes a connection to the accessed cell, and then establishes a connection to the core network device. When the terminal establishes the connection to the core network device, the terminal may send the first uplink NAS message to the core network device by using the base station. When sending the first uplink NAS message, the terminal may further send an identifier allocated to the terminal by a base station to which the terminal currently accesses. If the terminal accesses the false base station, the false base station receives the first uplink NAS message and the identifier of the terminal. The false base station modifies the identifier of the terminal into an identifier of the false base station, and sends the first uplink NAS message and the identifier of the false base station to the base station.

The terminal accesses a corresponding cell based on the received system information. When the terminal sends the first uplink NAS message to the core network device by using the currently accessed cell, the core network device sends a hash value of system information of a real base station to the terminal by using the first downlink NAS message that is integrity protected. Because the false base station cannot change a NAS message that is integrity protected, the terminal may determine, by using a first hash value of first system information carried in the NAS message that is integrity protected, whether the terminal accesses the false base station.

A difference between the methods described in the second aspect and the first aspect lies in whether the N2 message that is sent by the base station to the core network device after receiving the identifier of the first device and the first uplink NAS message carries the first system information or the hash value of the first system information. Other technical details are the same as those in the related descriptions of the first aspect, and details are not described herein again.

According to a third aspect, a false base station determining method is provided. A terminal may calculate a hash value (represented by second hash value below) of system information (represented by second system information below) corresponding to a currently accessed cell, and send a first uplink NAS message that is integrity protected and an identifier allocated by a currently accessed base station to the terminal, where the first uplink NAS message includes the second hash value. If the terminal accesses a false base station, the terminal sends, to the false base station, the first uplink NAS message and the identifier allocated by the currently accessed base station to the terminal. After the false base station receives the first uplink NAS message and the identifier allocated by the currently accessed base station to the terminal that are sent by the terminal, the false base station modifies the identifier allocated by the currently accessed base station to the terminal into an identifier allocated by a real base station to the false base station, and sends, to the base station (real base station), the first uplink NAS message and the identifier allocated by the real base station to the false base station. The real base station receives the first uplink NAS message that is integrity protected and an identifier of a first device. If the terminal accesses the false base station, the identifier of the first device is the identifier allocated by the real base station to the false base station; if the terminal does not access the false base station, the identifier of the first device is an identifier allocated by the real base station to the terminal. The real base station may obtain an identifier of a cell corresponding to the identifier of the first device, and then may obtain a hash value (that is, a first hash value) of system information (that is, first system information) corresponding to the identifier of the cell. Then, the base station sends an N2 message to a core network device, where the N2 message includes the first uplink NAS message that is integrity protected and the first hash value. The core network device receives the N2 message sent by the base station; obtains the second hash value of the first uplink NAS message; determines whether the first hash value is consistent with the second hash value; and if the first hash value is consistent with the second hash value, determines that the terminal does not access the false base station; or if the first hash value is inconsistent with the second hash value, determines that the terminal accesses the false base station. The first uplink NAS message that is integrity protected may be, for example, a NAS security mode complete message, or any NAS message that is integrity protected after NAS security activation.

Specifically, the terminal receives system information, and measures signal quality of a cell corresponding to the system information. If the signal quality meets a cell access condition, the terminal accesses, based on the system information, the cell corresponding to the system information. After the terminal accesses the cell, the terminal first establishes a connection to the accessed cell, and then establishes a connection to the core network device. When the terminal establishes the connection to the core network device, the terminal may send an uplink NAS message to the core network device by using the base station.

The terminal accesses a corresponding cell based on the second system information, and then the terminal sends the second hash value of the second system information to the core network device by using the first uplink NAS message that is integrity protected. Because the false base station cannot change a NAS message that is integrity protected, the core network device may learn, by using the NAS message that is integrity protected, the hash value of the system information corresponding to the cell currently accessed by the terminal, and determine, by using a hash value of system information of a cell that is provided by the real base station, whether the terminal accesses the false base station.

In a possible implementation, when determining that the first hash value is different from the second hash value, the core network device may send a first downlink NAS message that is integrity protected to the terminal, where the first downlink NAS message includes indication information used to indicate that the terminal accesses the false base station. The terminal receives the first downlink NAS message that is integrity protected, and performing integrity verification on the first downlink NAS message that is integrity protected. After the verification succeeds, the terminal reselects, based on the indication information used to indicate that the terminal accesses the false base station, a cell to perform access. For example, the indication information used to indicate that the terminal accesses the false base station is that the terminal accesses the false base station.

In a possible implementation, when determining that the first hash value is different from the second hash value, the core network device may send a system information obtaining request to the base station, where the system information obtaining request includes indication information used to indicate to obtain the first system information. Correspondingly, the base station receives the system information obtaining request sent by the core network device, and obtains the first system information based on the indication information used to indicate to obtain the first system information. The base station sends the first system information to the core network device. The core network device receives the first system information sent by the base station, and sends the first downlink NAS message that is integrity protected to the terminal, where the first downlink NAS message includes the indication information used to indicate that the terminal accesses the false base station. The indication information used to indicate that the terminal accesses the false base station is the first system information. The terminal receives the first downlink NAS message that is integrity protected, performs integrity verification on the first downlink NAS message that is integrity protected, and reselects, based on the first system information, a cell to perform access after the verification succeeds.

The core network device delivers, to the terminal by using a downlink NAS message that is integrity protected, first system information broadcast by the real base station. Because the false base station cannot change first system information in the NAS message that is integrity protected, the terminal reselects, based on the first system information, a cell to perform access, so that a possibility of accessing a cell of the false base station can be reduced, and a possibility of accessing a cell of the real base station can be increased.

In a possible implementation, the indication information that is used to indicate to obtain the first system information and that is in the system information obtaining request is the first hash value of the first system information, and the base station stores a hash value corresponding to each piece of system information. The base station obtains the first system information corresponding to the first hash value, and sends the first system information to the core network device.

In a possible implementation, the indication information that is used to indicate to obtain the first system information and that is in the system information obtaining request is an identifier of the terminal, and the identifier of the terminal is an identifier of the terminal agreed on between the core network device and the base station. The base station stores a correspondence between an identifier of a device (which may be a real terminal or a false base station) and the identifier of the terminal, where the identifier of the terminal is the identifier of the terminal agreed on between the core network device and the base station. After receiving the identifier of the terminal sent by the core network, the base station identifies, from the correspondence that is between the identifier of the device and the identifier of the terminal and that is stored in the base station, the identifier of the first device corresponding to the identifier of the terminal, and obtains first system information of the cell corresponding to the identifier of the first device.

According to a fourth aspect, a false base station determining method is provided. A terminal calculates a hash value (second hash value) of system information (second system information) corresponding to a currently accessed cell, and send a first uplink NAS message that is integrity protected and an identifier allocated by a currently accessed base station to the terminal. The first uplink NAS message includes the second hash value. If the terminal accesses a false base station, the terminal sends, to the false base station, the first uplink NAS message, the identifier of the terminal, and an identifier allocated by the currently accessed base station to the terminal. After the false base station receives the first uplink NAS message and the identifier allocated by the currently accessed base station to the terminal that are sent by the terminal, the false base station modifies the identifier allocated by the currently accessed base station to the terminal into an identifier allocated by a real base station to the false base station, and sends, to the real base station, the first uplink NAS message and the identifier allocated by the real base station to the false base station. The real base station receives the first uplink NAS message that is integrity protected and an identifier of a first device. If the terminal accesses the false base station, the identifier of the first device is the identifier allocated by the real base station to the false base station; if the terminal does not access the false base station, the identifier of the first device is an identifier allocated by the real base station to the terminal. The real base station may obtain an identifier of a cell corresponding to the identifier of the first device, and may further obtain first system information corresponding to the identifier of the cell. Then, the base station sends an N2 message to a core network device, where the N2 message includes the first uplink NAS message that is integrity protected and the first system information. The core network device receives the N2 message sent by the base station, obtains a second hash value of the first uplink NAS message, and calculates a first hash value of the first system information. Then, the core network device determines whether the first hash value is consistent with the second hash value; and if the first hash value is consistent with the second hash value, determines that the terminal does not access the false base station; or if the first hash value is inconsistent with the second hash value, determines that the terminal accesses the false base station. The first uplink NAS message that is integrity protected may be, for example, a NAS security mode complete message, or any NAS message that is integrity protected and that is after NAS security is activated.

A difference between the methods described in the fourth aspect and the third aspect lies in whether the N2 message that is sent by the real base station to the core network device after receiving the identifier of the first device and the first uplink NAS message carries the first system information or the hash value of the first system information. Other technical details are the same as those in the related descriptions of the third aspect, and details are not described herein again.

According to a fifth aspect, a false base station determining apparatus is provided. The apparatus has a functional module for implementing the method according to any one of the foregoing aspects and the possible implementations of the aspects. The functional module may be implemented by hardware, or may be implemented by hardware executing corresponding software. The hardware or the software includes one or more modules corresponding to the foregoing function.

In a possible implementation, the apparatus may be a chip or an integrated circuit.

In a possible implementation, the apparatus includes a transceiver and a processor. The processor is configured to execute a group of programs. When the programs are executed, the apparatus may perform the method according to any one of the foregoing aspects and the possible implementations of the aspects by using the transceiver.

According to a sixth aspect, a false base station determining apparatus is provided. The apparatus includes a processing unit and a transceiver unit. The processing unit may be implemented by using the processor in any one of the foregoing aspects and the possible implementations of the aspects. The transceiver unit may be implemented by using the transceiver in any one of the foregoing aspects and the possible implementations of the aspects. The processing unit may perform the methods according to any one of the foregoing aspects and the possible implementations of the aspects based on a function of the transceiver unit for receiving and sending a message.

According to a seventh aspect, a computer-readable storage medium is provided. The computer storage medium stores computer-readable instructions, and when a computer reads and executes the computer-readable instructions, the computer is enabled to perform the method according to any one of the foregoing aspects and the possible implementations of the aspects.

According to an eighth aspect, a computer program product is provided. When a computer reads and executes the computer program product, the computer is enabled to perform the method according to any one of the foregoing aspects and the possible implementations of the aspects.

According to a ninth aspect, a chip is provided. The chip is coupled to a memory, and is configured to read and execute a software program stored in the memory, to implement the method according to any one of the foregoing aspects and the possible implementations of the aspects.

### BRIEF DESCRIPTION OF DRAWINGS

FIG. 1 is a schematic diagram of a communication architecture when a false base station exists according to an embodiment of this application;
FIG. 2 is a schematic diagram of a false base station determining process according to an embodiment of this application;
FIG. 3 is a schematic diagram of a false base station determining process according to an embodiment of this application;
FIG. 4 is a schematic diagram of a false base station determining process according to an embodiment of this application;
FIG. 5 is a schematic diagram of a false base station determining process according to an embodiment of this application;
FIG. 6 is a schematic diagram of a false base station determining process according to an embodiment of this application;
FIG. 7 is a schematic diagram of a false base station determining process according to an embodiment of this application;
FIG. 8 is a schematic diagram of a false base station determining process according to an embodiment of this application;
FIG. 9 is a schematic diagram of a false base station determining process according to an embodiment of this application;
FIG. 10 is a schematic diagram of a false base station determining process according to an embodiment of this application;
FIG. 11 is a schematic diagram of a false base station determining apparatus according to an embodiment of this application; and
FIG. 12 is a schematic diagram of a false base station determining apparatus according to an embodiment of this application.

### DETAILED DESCRIPTION OF EMBODIMENTS

The following describes in detail the embodiments of this application with reference to the accompanying drawings.

For ease of understanding the embodiments of this application, the following describes some terms in the embodiments of this application, to facilitate understanding by a person skilled in the art.
(1) A terminal is also referred to as user equipment (user equipment, UE), a mobile station (mobile station, MS), a mobile terminal (mobile terminal, MT), or the like, and is a device that provides voice and/or data connectivity for a user. For example, the terminal device includes a handheld device, a vehicle-mounted device, or the like that has a wireless connection function. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.
(2) System information mainly includes a master information block (master information block, MIB), a system information block (system information block, SIB), and a positioning system information block. The master information block includes some of the most important and the most frequently transmitted parameters that need to be obtained by the terminal from an accessed cell, for example, a downlink bandwidth configuration and a system frame number. The system information block includes a plurality of different information blocks. For example, a system information block 1 includes a public land mobile network identifier, a tracking area number, a cell identifier, cell selection information, and the like. The positioning system information block mainly includes a positioning-related parameter, such as a base station location. Because content of the positioning system information block may change at any time as a terminal location changes, system information used to calculate a hash value in this application includes only the master information block and/or the system information block.
(3) An access stratum (access stratum, AS) procedure is a procedure in which a (radio) access stratum device (for example, a base station) needs to process. A non-access stratum (non-access stratum, NAS) procedure is a signaling procedure that only UE and a core network (core network, CN) device need to process, and the radio access stratum device does not need to process.
(4) Integrity protection ensures that, during transmission and storage of information or data, the information or the data is not modified without authorization or can be quickly discovered after being modified.

In addition, it should be noted that a message that is integrity protected in this application may further have confidentiality protection, where the confidentiality protection refers to a feature that information cannot be accessed or disclosed by an unauthorized person, entity, or procedure.

(5) An access and mobility management function (access and mobility management function, AMF) network element has a core network control plane function, and provides mobility management and access management functions of the user.

The term "and/or" in this application describes an association relationship for describing associated objects and represents that three relationships may exist. For example, A and/or B may represent the following three cases: Only A exists, both A and B exist, and only B exists. The character "/" generally represents an "or" relationship between the associated objects.

"A plurality of" in this application means two or more.

In the descriptions of this application, terms such as "first" and "second" are merely used for distinction and description, and should not be understood as an indication or implication of relative importance, or as an indication or implication of an order.

In addition, the term "example" in the embodiments of this application is used to represent giving an example, an illustration, or a description. Any embodiment or implementation solution described as an "example" in this application should not be explained as being more preferred or having more advantages than another embodiment or implementation solution. Exactly, the term "example" is used to present a concept in a specific manner.

The embodiments of this application provide a false base station determining method and apparatus. The method, the apparatus, and a system are based on a same technical concept. Because problem-resolving principles of the method, the apparatus, and the system are similar, mutual reference may be made among implementations of the apparatus, the system, and the method. Repeated parts are not described again.

The technical solutions in the embodiments of this application may be applied to various communications systems, for example, a long term evolution (long term evolution, LTE) system, a worldwide interoperability for microwave access (worldwide interoperability for microwave access, WiMAX) communications system, a future 5th generation (5th Generation, 5G) system such as a new radio access technology (new radio access technology, NR), and a future communications system.

For ease of understanding the embodiments of this application, the following describes application scenarios of this application. A service scenario described in the embodiments of this application is intended to describe the technical solutions in the embodiments of this application more clearly, and does not constitute a limitation on the technical solutions provided in the embodiments of this application. A person of ordinary skill in the art may know that, as a new service scenario emerges, the technical solutions provided in the embodiments of this application are also applicable to a similar technical problem.

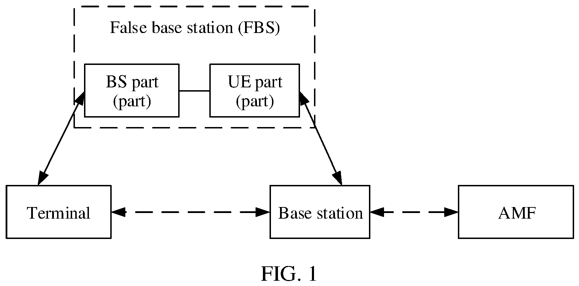

FIG. 1 is a schematic diagram of a communication architecture when a false base station exists. In a normal communication scenario, a real base station broadcasts system information to a covered cell. A terminal receives system information of a neighboring cell, measures signal quality when receiving system information of each cell, and selects a cell with better signal quality to perform access. For example, when the terminal initially accesses a cell, the terminal determines whether signal quality meets an access requirement of the cell. If the signal quality meets the access requirement of the cell, the terminal accesses the cell. For example, when the terminal currently accesses a cell of a source base station, the terminal may generate a signal quality measurement report and send the signal quality measurement report to the source base station. When determining that signal quality of a cell is better than signal quality of the cell currently accessed by the terminal, the source base station triggers a handover threshold of the source base station to control the terminal to access the cell having better signal quality.

If an attacker deploys a false base station, the false base station includes a base station part (BS part) and a terminal part (UE part). The terminal part in the false base station receives system information of a cell of the real base station, and accesses the cell of the real base station based on the system information of the cell of the real base station. The false base station may change information other than a cell identifier in the received system information of the cell of the real base station, for example, change cell selection information. The base station part of the false base station broadcasts changed system information. The system information of the neighboring cell received by the terminal includes the changed system information broadcast by the false base station. When measuring signal quality of the neighboring cell, the terminal also measures signal quality of a cell of the false base station. The false base station is close to the terminal or has high signal power. When the terminal initially accesses a cell, signal quality of the false base station is quite good. As a result, the terminal accesses the cell of the false base station. Alternatively, when the terminal currently accesses the cell of the source base station, because the false base station is close to the terminal or has high signal power, signal quality of the false base station is better, and the handover threshold of the source base station may be triggered. As a result, the terminal accesses the cell of the false base station.

After the false base station accesses the cell of the real base station, the real base station considers the terminal part of the false base station as a real terminal, and allocates an identifier to the terminal part of the false base station. When the false base station determines that the terminal accesses the cell of the false base station, the base station part of the false base station may allocate an identifier to the terminal. When the false base station allocates an identifier to the terminal, the false base station may generate an identifier and allocate the identifier to the terminal. In this case, the identifier allocated by the false base station to the terminal may be different from the identifier allocated by the real base station to the false base station. When the false base station allocates the identifier to the terminal, the false base station may also allocate, to the terminal, the identifier allocated by the real base station to the terminal part of the false base station. In this case, the identifier allocated by the false base station to the terminal may be the same as the identifier allocated by the real base station to the false base station.

After the terminal accesses the cell of the false base station, an uplink message sent by the terminal first arrives at the false base station. If the uplink message sent by the terminal is not integrity protected, the false base station may send the uplink message to the real base station after changing content of the uplink message. The real base station may further send the uplink message to the core network device (in this application, the core network device includes but is not limited to an AMF). A downlink message sent by the real base station to the terminal first arrives at the false base station. If the downlink message is not integrity protected, the false base station may send the downlink message to the terminal after changing content of the downlink message. The real base station is generally referred to as a base station.

To discover the false base station, whether the terminal accesses the false base station may be determined by comparing whether a hash value of system information received by the terminal is the same as a hash value of system information broadcast by the real base station. A device for performing hash value comparison may be the terminal, the base station, or the core network device. In this application, the hash value of the system information broadcast by the real base station may be transferred by using a downlink NAS message that is integrity protected or a downlink AS message that is integrity protected, or the hash value of the system information received by the terminal may be transferred by using an uplink NAS message that is integrity protected or an uplink AS message that is integrity protected. Because a message for transferring a hash value is integrity protected, the false base station cannot change the message that is integrity protected, and the transferred hash value is not changed. Whether the terminal accesses the false base station can be accurately and quickly determined by comparing two hash values.

In addition, it should be noted that a NAS security context may be activated between the terminal and the core network device by using a NAS security mode command message and a NAS security mode complete message. After the NAS security context is activated, the terminal and the core network device may integrity protect a NAS message by using the NAS security context. An AS security context may be activated between the terminal and the base station by using an AS security mode command message and an AS security mode complete message. After the AS security context is activated, the terminal and the core network device may integrity protect an AS message by using the AS security context. A process of activating the NAS security context is earlier than a process of activating the AS security context. Therefore, the false base station may be determined earlier by transferring the hash value by using the NAS message that is integrity protected than by transferring the hash value by using the AS message that is integrity protected.

For ease of description, in this application, system information of the cell currently accessed by the terminal is referred to as second system information, and a hash value calculated based on the second system information is referred to as a second hash value. System information broadcast by the real base station and corresponding to the second system information is referred to as first system information, and a hash value calculated based on the first system information is referred to as a first hash value. When a hash value is calculated based on system information, for example, a hash operation may be performed on the system information to obtain a value of a fixed length, and the value is the hash value.

The following describes a process in which the hash value is transferred by using the NAS message that is integrity protected, so that the terminal determines whether the terminal accesses the false base station.

It should be noted that a downlink NAS message sent by the core network device to the terminal first arrives at the base station, and the base station sends the downlink NAS message to the terminal. When no false base station exists, the base station directly sends the downlink NAS message to the terminal. When a false base station exists, the terminal accesses the false base station, and the false base station pretends to be the terminal to communicate with the real base station and the core network device. In this case, the base station sends the downlink NAS message to the false base station, and the false base station sends the downlink NAS message to the terminal. Similarly, when the terminal sends an uplink NAS message to the core network device, the terminal sends the uplink NAS message to the base station, and the base station sends the uplink NAS message to the core network device. When no false base station exists, the terminal directly sends the uplink NAS message to the base station. When a false base station exists, the terminal accesses the false base station, and the false base station pretends to be the real base station to communicate with the terminal. In this case, the terminal sends the uplink NAS message to the false base station, the false base station sends the uplink NAS message to the real base station, and then the real base station sends the uplink NAS message to the core network device.

In addition, it should be noted that, after a hash value of system information carried in a NAS message is parsed on a NAS of the terminal, the hash value is transferred to an RRC layer of the terminal. The RRC layer compares the hash value of the system information carried in the NAS message with a hash value of system information received by the terminal, to determine whether a false base station exists.

To enable the core network device to identify a specific terminal that sends the uplink NAS message, the uplink NAS message may include an identifier allocated by the core network device to the terminal, and neither the false base station nor the base station can parse the identifier of the terminal in the NAS message.

When the terminal sends the uplink NAS message, the uplink NAS message first arrives at a base station currently accessed by the terminal. To enable the currently accessed base station to identify the terminal, and ensure normal communication, the terminal may further send an identifier that is allocated by the currently accessed base station to the terminal, where the currently accessed base station may be a real base station or a false base station. If the currently accessed base station is the false base station, the false base station receives the uplink NAS message and the identifier of the terminal. The false base station changes the identifier of the terminal to an identifier allocated by the base station to the false base station, and sends the uplink NAS message and the identifier of the false base station to the real base station. For the real base station, when receiving the uplink NAS message, the real base station receives an identifier of a first device. If the terminal accesses the false base station, the identifier of the first device is the identifier allocated by the base station to the false base station, or if the terminal does not access the false base station, the identifier of the first device is an identifier allocated by the base station to the terminal. The identifier allocated by the false base station to the terminal may be the same as or different from the identifier allocated by the real base station to the false base station.

In a possible implementation, it is agreed on in advance that the real base station calculates the first hash value of the first system information, the core network device transfers the first hash value to the terminal by using the downlink NAS message that is integrity protected, and the terminal determines whether the terminal accesses the false base station.

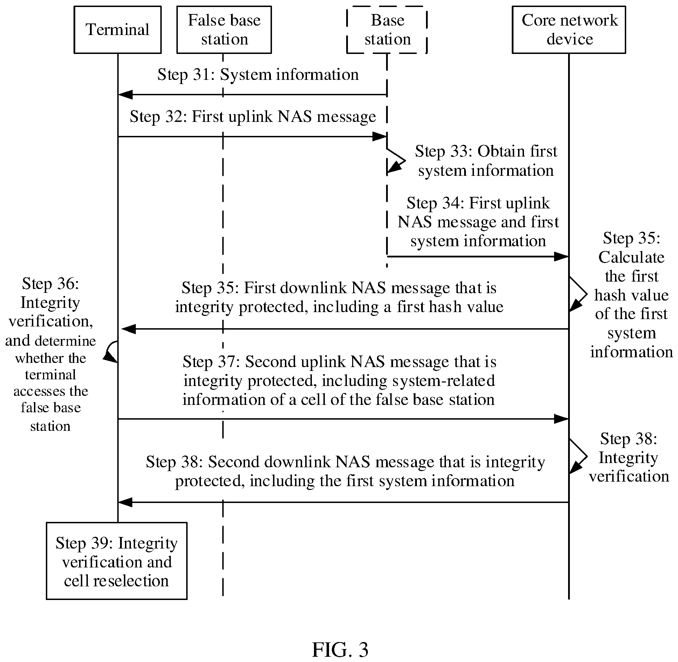

FIG. 3 is a schematic diagram of a false base station determining process.

Step 31: A terminal receives system information.

The terminal receives a plurality of pieces of system information, and the plurality of pieces of system information may include system information broadcast by a real base station to a cell, or may include system information broadcast by a false base station to a cell. The terminal determines signal quality of a plurality of cells based on the received plurality of pieces of system information, and selects a suitable cell to perform access. System information of a cell accessed by the terminal is referred to as second system information.

Step 32: The terminal sends a first uplink NAS message.

After the terminal accesses a cell, the terminal may first establish a connection to the accessed cell, and then establish a connection to a core network device. In a process in which the terminal establishes the connection to the core network device, various types of NAS messages are exchanged between the terminal and the core network device. For example, the terminal sends a NAS registration request message to the core network device for network access registration; for another example, the terminal sends a NAS service request message to the core network device to request a service from the core network device. The first uplink NAS message is the NAS registration request message or the NAS service request message.

Any uplink NAS message sent by the terminal to the core network device needs to be forwarded by a base station. It may be agreed on in advance that when the terminal sends a specific uplink NAS message to the core network device, determining of the false base station is triggered. It should be noted that the terminal interacts with the base station by using an RRC message. An uplink NAS message sent by the terminal to the core network device is included in an uplink RRC message. In addition to the uplink NAS message, the uplink RRC message may further include an information element, such as a registration type or a service request parameter, used to identify the uplink NAS message. Therefore, the base station may identify whether an uplink NAS message currently sent by the terminal is an uplink NAS message used to trigger determining of the false base station.

If the terminal stores a NAS security context, the first uplink NAS message may be a message that is integrity protected; if the terminal does not store a NAS security context, the first uplink NAS message is a message that is not integrity protected.

Step 33: The base station receives the first uplink NAS message and an identifier of a first device, and obtains first system information of a cell corresponding to the identifier of the first device.

When receiving the first uplink NAS message, the base station may further receive the identifier of the first device that directly sends the first uplink NAS message to the base station, where the identifier of the first device is an identifier allocated by the base station to the first device. The base station determines whether the first uplink NAS message is the uplink NAS message used to trigger determining of the false base station. If the first uplink NAS message is the uplink NAS message used to trigger determining of the false base station, the base station may obtain, based on the identifier of the first device, the first system information of the cell corresponding to the identifier of the first device. A specific process is as follows:

The base station stores an identifier of a cell corresponding to an identifier of each device, and stores system information corresponding to the identifier of each cell. The identifier of the cell corresponding to the identifier of each device may be understood as: A device identified by an identifier of the device is located in a cell identified by an identifier of the cell or a device identified by an identifier of the device accesses a cell identified by an identifier of the cell. The system information corresponding to the identifier of the cell may be understood as system information broadcast by the base station to the cell identified by the identifier of the cell. The base station may identify, based on the identifier of the first device and the identifier of the cell corresponding to the identifier of each device, an identifier of a cell corresponding to the identifier of the first device, and then determine, based on the system information corresponding to the identifier of each cell, first system information corresponding to the identifier of the cell corresponding to the identifier of the first device.

Step 34: The base station sends an N2 message to the core network device, where the N2 message includes the first uplink NAS message and the first system information.

After determining the first system information, the base station may send the first uplink NAS message and the first system information to the core network device by using the N2 message.

For example, the N2 message is an initial context setup (initial context setup) message.

The base station may further store time information for broadcasting each piece of system information. When the base station obtains the first system information, the first system information may be the latest system information, or may be system information at any time. If the base station obtains the latest system information, the base station may not notify the core network device of a time of the first system information. If the base station obtains the system information at any time, the base station may notify the core network device of a time of the first system information. For example, the N2 message includes time information of the first system information.

Step 35: The core network device receives the N2 message, calculates a first hash value of the first system information, and sends a first downlink NAS message that is integrity protected, where the first downlink NAS message includes the first hash value of the first system information.

The core network device may receive the first system information and the first uplink NAS message that are sent by the base station. The core network device determines that the received first uplink NAS message is a message used to trigger determining of a false base station. The core network device calculates the first hash value based on the first system information, and sends the first hash value to the terminal by using the first downlink NAS message that is integrity protected. The first downlink NAS message may be, for example, a NAS security mode command message.

When calculating the first hash value based on the first system information, the core network device may perform calculation based on one MIB and some or all of SIBs in the first system information. For example, one piece of system information includes a plurality of SIBs and one MIB. The first hash value may be calculated based on a mandatory SIB (for example, a SIB whose number is 1) in the SIBs and the MIB, or may be calculated based on the MIB and the first several SIBs in the SIBs, the last several SIBs in the SIBs, or several intermediate SIBs in the SIBs.

The core network device may determine specific content that is of the first system information and that is used to calculate the first hash value, or the base station may indicate specific content that is of the first system information and that is used by the core network device to calculate the first hash value. For example, the N2 message includes list information of the first system information, where the list information indicates a SIB number and/or a MIB number. The base station indicates, by using the list information of the first system information, specific content that is of the first system information and that is used by the core network device to calculate the first hash value. In this case, the core network device may determine, from the received first system information, first system information corresponding to the list information of the first system information, and calculate a first hash value based on the determined first system information.

For example, the first downlink NAS message includes the time information and/or the list information of the first system information, so that the terminal is enabled to calculate a hash value by using system information corresponding to a time or system information corresponding to content.

A NAS message that is integrity protected includes an identifier allocated by the core network device to the terminal, and the false base station cannot be changed. Therefore, before sending the first downlink NAS message that is integrity protected, the core network device may determine whether the NAS security context of the terminal is stored. If the NAS security context of the terminal is not stored, the core network device may deliver the first hash value by using the NAS security mode command (NAS security mode command, NAS SMC for short) message. The first downlink NAS message may be the NAS SMC message, where the NAS SMC message is used to negotiate the NAS security context and is the first NAS message that is integrity protected between the terminal and the core network device. If the NAS security context of the terminal is stored, the core network device may deliver the first hash value by using any NAS message that is integrity protected.

Step 36: The terminal receives the first downlink NAS message that is integrity protected, verifies integrity of the first downlink NAS message, and determines, based on the first hash value of the first system information, whether the terminal accesses the false base station if the verification succeeds.

The terminal may receive the first downlink NAS message that is integrity protected and that is sent by the core network device, and the terminal may first perform integrity verification on the first downlink NAS message. If the integrity verification succeeds, it indicates that the first downlink NAS message is not changed, and the terminal may determine, based on the first hash value of the first system information in the first downlink NAS message, whether the terminal accesses the false base station. If the integrity verification fails, it indicates that the first downlink NAS message is changed, and the terminal may discard the hash value of the first system information in the first downlink NAS message.

It should be noted that a message that is integrity protected generally includes MAC information. For example, the first downlink NAS message further includes message authentication code (MAC) information. When verification is performed on the message that is integrity protected, a same hash algorithm may be used to perform a hash operation on system information in the message that is integrity protected, to calculate MAC information. The calculated MAC information is compared with the MAC information in the message that is integrity protected, to determine whether the two pieces of MAC information are the same. If the two pieces of MAC information are the same, the integrity verification succeeds.

When the terminal determines, based on the first hash value of the first system information, whether the terminal accesses the false base station, for example, the terminal determines the second system information of the cell accessed by the terminal, that is, determines second system information received by the terminal, calculates a second hash value based on the second system information, and determines whether the first hash value is the same as the second hash value. If the first hash value is different from the second hash value, it is determined that the terminal accesses the false base station, and the cell accessed by the terminal is a cell of the false base station; if the first hash value is the same as the second hash value, it is determined that the terminal does not access the false base station, and the cell accessed by the terminal is a cell of the real base station.

If the first downlink NAS message includes the time information, when calculating the second hash value based on the second system information, the terminal may determine second system information corresponding to the time information from the received second system information, and calculates the second hash value based on the determined second system information.

If the first downlink NAS message includes the list information of the first system information, when calculating the second hash value based on the second system information, the terminal may determine second system information corresponding to the list information of the first system information from the received second system information, and calculates the second hash value based on the determined second system information.

In this embodiment of this application, the core network device delivers the first hash value of the first system information by using a downlink NAS message that is integrity protected. Because a NAS message transmission process is earlier than an AS message transmission process, the false base station may be discovered earlier.

In this embodiment of this application, when determining that the terminal accesses the false base station, the terminal may directly reselect a cell to perform access. Alternatively, the terminal may wait for the core network device to deliver first system information of the cell of the real base station, and perform cell reselection based on the first system information. Alternatively, the terminal may first reselect a cell to perform access, and reselect, based on the first system information, another cell to perform access after receiving the first system information.

The following step 37 to step 39 are optional, and describe a process in which the terminal waits for the core network device to deliver the first system information of the cell of the real base station, and performs cell reselection based on the first system information.

Step 37: After determining that the terminal accesses the false base station, the terminal sends a second uplink NAS message that is integrity protected to the core network device, where the second uplink NAS message includes indication information used to indicate that the terminal accesses the false base station.

For example, the second uplink NAS message is a NAS security mode complete (NAS security mode complete, NAS SMP for short) message. Alternatively, the second uplink NAS message may be another uplink NAS message that is integrity protected.

The indication information that is used to indicate that the terminal accesses the false base station and that is sent by the terminal to the core network device is that the terminal accesses the false base station. In other words, the terminal only notifies the core network device that the terminal accesses the false base station.

To help the core network device collect information about the false base station, so that a public security person or an operator suppresses the false base station, or notifies another terminal not to access the false base station, for example, the indication information used to indicate that the terminal accesses the false base station may be system-related information of the cell (the cell of the false base station) accessed by the terminal. The system-related information includes the second system information of the cell accessed by the terminal or the second hash value of second system information of the cell accessed by the terminal.

Step 38: The core network device performs integrity verification on the second uplink NAS message, and sends a second downlink NAS message that is integrity protected to the terminal after the verification succeeds, where the second downlink NAS message includes the first system information.

After the core network device receives the indication information that is used to indicate that the terminal accesses the false base station and that is sent by the terminal, the core network device may send the first system information to the terminal, so that when the terminal reselects a cell to perform access, a possibility of accessing the cell of the false base station is reduced, and a possibility of accessing a real cell corresponding to the first system information is increased.

Step 39: The terminal receives the second downlink NAS message that is integrity protected, performs integrity verification on the second downlink NAS message, and performs cell reselection based on the first system information in the second downlink NAS message after the verification succeeds.

The core network device delivers first system information broadcast by the real base station to the terminal, and the terminal reselects, based on the first system information, a cell to perform access, so that a possibility of accessing the cell of the false base station next time can be reduced, and a possibility of accessing the cell of the real base station can be increased.

In another possible implementation, it is agreed on in advance that the core network device calculates the first hash value of the first system information, the core network device transfers the first hash value by using the downlink NAS message that is integrity protected, and the terminal determines whether the terminal accesses the false base station.

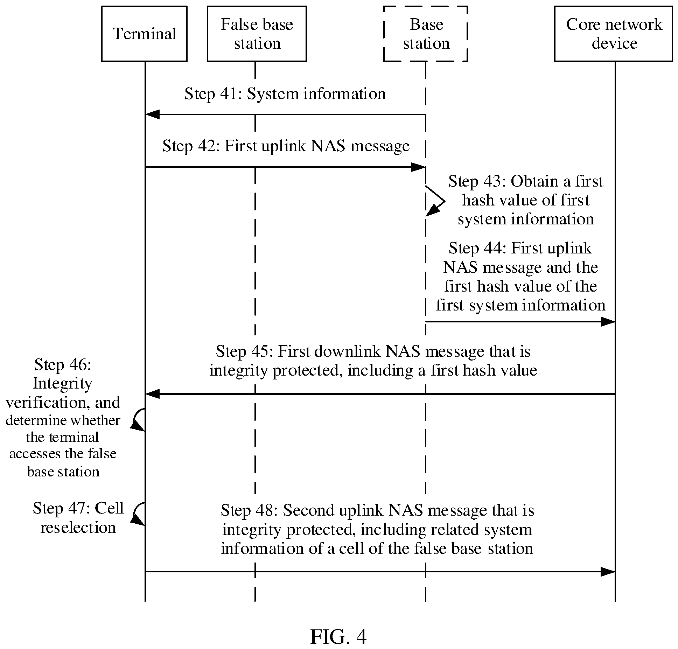

FIG. 4 is a schematic diagram of a false base station determining process.

Step 41 and step 42 are the same as step 31 and step 32. Repeated parts are not described again.

Step 43: The base station receives the first uplink NAS message and an identifier of a first device, and obtains a first hash value of first system information of a cell corresponding to the identifier of the first device.

When the base station determines that the first uplink NAS message is an uplink NAS message used to trigger determining of a false base station, the base station may obtain, based on the identifier of the first device, the first system information of the cell corresponding to the identifier of the first device. A process of obtaining the first system information is the same as the process of obtaining the first system information in step 33. Repeated parts are not described again.

After obtaining the first system information, the base station may further calculate the first hash value based on the first system information. The first system information may be the latest system information, or may be system information at any time.

When calculating the first hash value based on the first system information, the base station may perform calculation based on one MIB and some or all of SIBs in the first system information. For example, one piece of system information includes a plurality of SIBs and one MIB. The first hash value may be calculated based on, in the first system information, a mandatory SIB (for example, a SIB 1) and the MIB , or may be calculated based on the MIB and the first several SIBs in the first system information, the last several SIBs in the first system information, or several intermediate SIBs in the first system information.

Step 44: The base station sends an N2 message to a core network device, where the N2 message includes the first uplink NAS message and the first hash value of the first system information.

The base station may notify the core network device of a time corresponding to the first system information and specific content in the first system information that is used to calculate the first hash value, so that the terminal is enabled to calculate a hash value by using system information corresponding to a time or system information corresponding to content. For example, the N2 message includes time information and/or list information of the first system information.

Step 45: The core network device receives the N2 message, and sends a first downlink NAS message that is integrity protected, where the first downlink NAS message includes the first hash value of the first system information.

Step 46 is the same as step 36. Repeated parts are not described again.

In this embodiment of this application, the core network device delivers the first hash value of the first system information by using a downlink NAS message that is integrity protected. Because a NAS message transmission process is earlier than an AS message transmission process, the false base station may be discovered earlier.

Step 47: After determining that the terminal accesses the false base station, the terminal directly performs cell reselection.

Step 48: The terminal sends a second uplink NAS message that is integrity protected to the core network device, where the second uplink NAS message includes indication information used to indicate that the terminal accesses the false base station.

The indication information used to indicate that the terminal accesses the false base station in step 48 may be the same as the indication information used to indicate that the terminal accesses the false base station in step 37. Repeated parts are not described again.

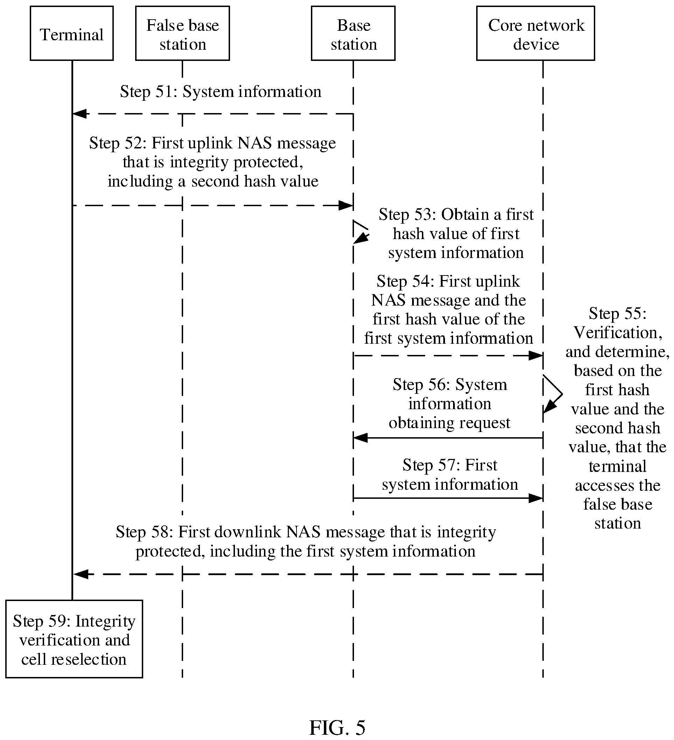

In this embodiment, the terminal may also wait for first system information broadcast by the real base station, and perform cell reselection based on the first system information. For a specific process, refer to step 37, step 38, and step 39 in FIG. 3. It should be noted that, in this embodiment, the base station reports only a hash value of the first system information to the core network device, but does not report the first system information. Therefore, the core network device should further obtain the first system information from the base station, and send the first system information to the terminal. For a process in which the core network device obtains the first system information from the base station, and sends the first system information to the terminal, refer to step 56 to step 59 in FIG. 5.

In another possible implementation, it is specified in advance that the terminal reports a second hash value of second system information to the core network device by using an uplink NAS message that is integrity protected, the base station reports the first hash value of the first system information to the core network device, and the core network device determines whether the terminal accesses the false base station.

FIG. 5 is a schematic diagram of a false base station determining process.

Step 51: A terminal receives system information.

Step 52: The terminal obtains a second hash value of second system information of an accessed cell, and sends a first uplink NAS message that is integrity protected, where the first uplink NAS message includes the second hash value of the second system information.

To determine whether the terminal accesses a false base station, the terminal may calculate a second hash value of received second system information, and report the second hash value by using an uplink NAS message that is integrity protected. A core network device determines whether the terminal accesses the false base station.

If the terminal stores a NAS security context, the first uplink NAS message may be any uplink NAS message, for example, a NAS message used to request a service or a NAS message used for registration. This is similar to content in step 32, and repeated parts are not described again.

If the terminal does not store a NAS security context, the first uplink NAS message may be a NAS security mode complete message. The second hash value may be located in a non-plaintext information element of a NAS message, and integrity verification is performed by using an initial NAS message verification mechanism.

Step 53: Abase station receives the first uplink NAS message that is integrity protected and an identifier of a first device, and obtains a first hash value of first system information of a cell corresponding to the identifier of the first device.

After receiving the first uplink NAS message that is integrity protected, the base station may determine, based on information in an RRC message in which the uplink NAS message is located, whether the first uplink NAS message is an uplink NAS message used to trigger determining of the false base station. If the first uplink NAS message is the uplink NAS message used to trigger determining of the false base station, the base station obtains the first system information and the first hash value of the cell corresponding to the identifier of the first device, and a specific process of obtaining the first hash value is the same as the specific process in which the base station obtains the first system information and the first hash value of the cell corresponding to the identifier of the first device in step 43. Repeated parts are not described again.

Step 54: The base station sends an N2 message to the core network device, where the N2 message includes the first uplink NAS message and the first hash value of the first system information, and the first uplink NAS message includes the second hash value of the second system information of the cell accessed by the terminal.

After determining the first hash value of the first system information, the base station may send the first uplink NAS message and the first hash value of the first system information to the core network device by using the N2 message.

For example, the N2 message is an initial context setup message.

Step 55: The core network device receives the N2 message, performs integrity verification on the first uplink NAS message; determines whether a hash value of the first system information is consistent with a hash value of the second system information after the verification succeeds; and if the hash value of the first system information is consistent with the hash value of the second system information, determines that the terminal does not access the false base station; or if the hash value of the first system information is inconsistent with the hash value of the second system information, determines that the terminal accesses the false base station.

When the core network device determines that the terminal accesses the false base station, the core network device may send, to the terminal, indication information used to indicate that the terminal accesses the false base station. For example, when the core network device determines that the terminal accesses the false base station, the core network device sends a first downlink NAS message that is integrity protected to the terminal, where the first downlink NAS message includes the indication information used to indicate that the terminal accesses the false base station. The terminal receives the first downlink NAS message that is integrity protected, performs integrity verification on the first downlink NAS message that is integrity protected, and reselects, based on the first system information, a cell to perform access after the verification succeeds. The indication information used to indicate that the terminal accesses the false base station is that the terminal accesses the false base station.

In this embodiment of this application, the terminal reports the second hash value of the second system information by using the uplink NAS message that is integrity protected. Because a NAS message transmission process is earlier than an AS message transmission process, the core network device may discover the false base station earlier.

To reduce a possibility of accessing a cell of the false base station and increase a possibility of accessing a cell of a real base station, the core network device may further deliver the first system information to the terminal, so that the terminal reselects, based on the first system information, a cell to perform access.

The following step 56 to step 59 are optional, and describe a process in which the core network device delivers first system information of the cell of the real base station to the terminal, so that the terminal performs cell reselection based on the first system information.

Step 56: When the core network device determines that the terminal accesses the false base station, the core network device sends a system information obtaining request to the base station, where the system information obtaining request includes indication information used to indicate to obtain the first system information.

Step 57: After receiving the system information obtaining request, the base station obtains the first system information based on the indication information used to indicate to obtain the first system information, and sends the first system information to the core network device. Correspondingly, the core network device receives the first system information sent by the base station.

The base station sends the first system information to the core network device by using the N2 message.

For example, the indication information used to indicate to obtain the first system information is a first hash value, the base station stores a correspondence between a hash value and system information, and the base station may obtain first system information corresponding to the first hash value.

For example, the indication information used to indicate to obtain the first system information is an identifier of the terminal, and the identifier of the terminal is an identifier of the terminal agreed on between the core network device and the base station.

The base station stores a correspondence between an identifier of a device (which may be the real terminal or a false base station) and the identifier of the terminal, where the identifier of the device is an identifier allocated by the base station to the device, and the identifier of the terminal is the identifier of the terminal agreed on between the core network device and the base station. After receiving a system information obtaining request message, the base station may identify, based on an identifier of the terminal in the system information obtaining request message from the correspondence between the identifier of the device and the identifier of the terminal stored in the base station, an identifier of a first device corresponding to the identifier of the terminal in the system information obtaining request message. Then, the base station obtains first system information of a cell corresponding to the identifier of the first device.

For example, the system information obtaining request includes an indicator, where the indicator is an identifier for requesting an original text of system information.

Step 58: The core network device sends the first downlink NAS message that is integrity protected to the terminal, where the first downlink NAS message includes the indication information used to indicate that the terminal accesses the false base station, and the indication information used to indicate that the terminal accesses the false base station is the first system information.

The first downlink NAS message that is integrity protected may be a NAS SMC message, another NAS message that is integrity protected, or a NAS reject message that is integrity protected.

Step 59: The terminal receives the first downlink NAS message, performs integrity verification on the first downlink NAS message, and performs cell reselection based on the first system information in the first downlink NAS message after the verification succeeds.

Optionally, after the terminal receives the indication information used to indicate that the terminal accesses the false base station (which may be that the terminal accesses the false base station, or may be the first system information), the terminal may report related information of the cell of the false base station to the core network device. For example, the terminal sends a second uplink NAS message that is integrity protected to the core network device, where the second uplink NAS message includes system-related information of the cell accessed by the terminal.

In another possible implementation, it is specified in advance that the core network device completes calculation of the first hash value. In this case, after determining that the terminal accesses the false base station, the core network device may skip step 56 and step 57, and directly perform step 58.

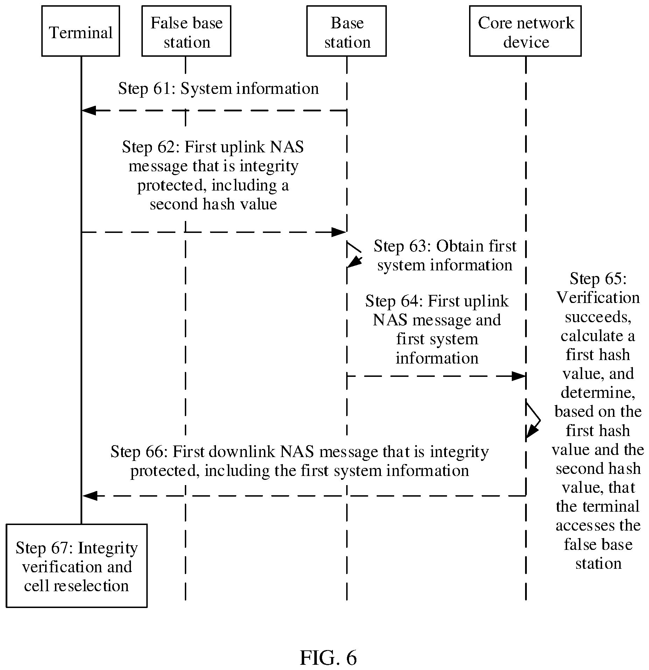

FIG. 6 is a schematic diagram of a false base station determining process.

Step 61 and step 62 are the same as step 51 and step 52. Repeated parts are not described again.

Step 63: Abase station receives the first uplink NAS message that is integrity protected and an identifier of a first device, and obtains first system information of a cell corresponding to the identifier of the first device.

Step 64: The base station sends an N2 message to the core network device, where the N2 message includes the first uplink NAS message and the first system information, and the first uplink NAS message includes the second hash value of the second system information of the cell accessed by the terminal.

Step 65: The core network device receives the N2 message sent by the base station, performs integrity verification on the first uplink NAS message; calculates a first hash value of the first system information after the verification succeeds; determines whether the first hash value of the first system information is consistent with the second hash value of the second system information; and if the first hash value of the first system information is consistent with the second hash value of the second system information, determines that the terminal does not access the false base station; or if the first hash value of the first system information is inconsistent with the second hash value of the second system information, determines that the terminal accesses the false base station.

Step 66: When determining that the terminal accesses the false base station, the core network device sends a first downlink NAS message that is integrity protected to the terminal, where the first downlink NAS message includes indication information used to indicate that the terminal accesses the false base station. For example, the indication information used to indicate that the terminal accesses the false base station is the first system information. Certainly, the indication information used to indicate that the terminal accesses the false base station may alternatively be that the terminal accesses the false base station.

Step 67: The terminal receives the first downlink NAS message, performs integrity verification on the first downlink NAS message, and performs cell reselection based on the first system information in the first downlink NAS message after the verification succeeds.

In the embodiment shown in FIG. 6, when the core network device determines that the terminal accesses the false base station, the core network device may send the first downlink NAS message that is integrity protected to the terminal, where the first downlink NAS message may not include the first system information. The first downlink NAS message may be only used to notify that the terminal accesses the false base station. After receiving the first downlink NAS message sent by the core network device and performing integrity verification, the terminal may directly reselect a cell to perform access.

Optionally, after the terminal receives the indication information used to indicate that the terminal accesses the false base station (which may be that the terminal accesses the false base station, or may be the first system information), the terminal may report related information of the cell of the false base station to the core network device. For example, the terminal sends a second uplink NAS message that is integrity protected to the core network device, where the second uplink NAS message includes system-related information of the cell accessed by the terminal.

The foregoing FIG. 3, FIG. 4, FIG. 5, and FIG. 6 describe the process in which the hash value is transferred by using the NAS message that is integrity protected, to determine whether the terminal accesses the false base station. The following describes a process in which a hash value is transferred by using an AS message that is integrity protected, to determine whether a terminal accesses a false base station. When the false base station is determined by transferring the hash value by using the AS message, a base station may deliver a first hash value to the terminal, and the terminal determines whether the terminal accesses the false base station; or the terminal may report a second hash value to a base station, and the base station determines whether the terminal accesses the false base station. A process of determining the false base station by transferring the hash value by using the AS message may be applied to a scenario in which the terminal establishes AS security with the base station, may be applied to a scenario in which the terminal performs access stratum reestablishment after a radio link failure (radio link failure) occurs, or may be applied to a scenario in which the terminal in an inactive state resumes a link.

To enable the base station to identify a specific terminal that sends an uplink AS message, the AS message sent by the terminal includes an identifier of the terminal, where the identifier of the terminal is an identifier allocated to the terminal by the base station to which the terminal currently accesses. In this application, when the false base station is determined by transferring the hash value by using the AS message, the identifier allocated by the false base station to the terminal is the same as an identifier allocated by a real base station to the false base station. In other words, regardless of whether the terminal accesses the false base station, the identifier of the terminal in the AS message sent by the terminal is the same as an identifier of a first device in an AS message received by the base station.

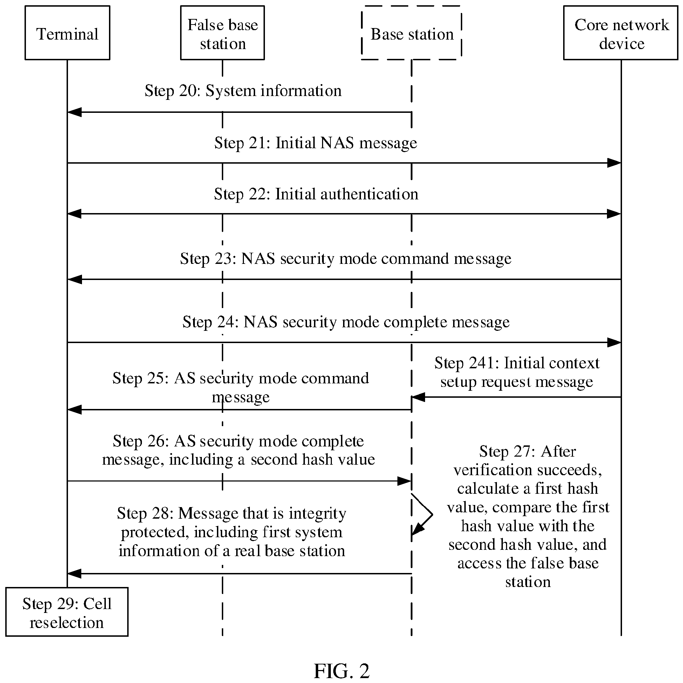

FIG. 2 is a schematic diagram of a false base station determining process. This embodiment may be applied to a scenario in which a terminal establishes AS security with a base station, and the base station determines whether the terminal accesses a false base station.

Step 20: The terminal receives system information.

Step 21: The terminal sends a first uplink NAS message to a core network device. For example, the first uplink NAS message is an initial NAS message (initial NAS message).

(Optional) Step 22: The terminal sends initial authentication (authentication) of a network side.

Step 23: The core network device sends a first downlink NAS message to the terminal. For example, the first downlink NAS message is a NAS security mode command (NAS security mode command, NAS SMC for short) message.

Optionally, the NAS security mode command message includes an indication indicating that system information protection is supported, and the indication indicating that the system information protection is supported is used to indicate that a base station has a false base station discovery function. The indication indicates that all base stations served by a current public land mobile network (public land mobile network, PLMN) support the system information protection. The terminal and the core network device may agree on that, after receiving the indication, the UE stores the indication as a part of a security context. In this case, the core network device does not need to send the indication each time.

Step 24: The terminal sends a second uplink NAS message to the core network device. For example, the second uplink NAS message is a NAS security mode complete (NAS security mode complete, NAS SMP for short) message.

Step 241: The core network device receives the second uplink NAS message, and the core network device sends a downlink N2 message to the base station. For example, the downlink N2 message is an initial context setup request message. The N2 message includes an identifier of the terminal, the identifier of the terminal is an identifier of the terminal agreed on between the core network device and the base station, and the identifier of the terminal is an identifier of the terminal in the second uplink NAS message.

Step 25: The base station obtains an identifier of a first device based on the identifier of the terminal in the N2 message, and sends a first downlink AS message to the first device. For example, the first downlink AS message is an AS security mode command (AS security mode command) message.

The base station stores a correspondence between an identifier of a device (which may be a real terminal or a false base station) and the identifier of the terminal, where the identifier of the device is an identifier allocated by the base station to the device, and the identifier of the terminal is the identifier of the terminal agreed on between the core network device and the base station. After receiving a system information obtaining request message, the base station may identify, based on an identifier of the terminal in the system information obtaining request message from the correspondence between the identifier of the device and the identifier of the terminal stored in the base station, an identifier of a first device corresponding to the identifier of the terminal in the system information obtaining request message.

Optionally, the AS security mode command message carries the indication indicating that the system information protection is supported.

If the terminal does not access the false base station, the first device is the terminal, and a downlink AS message sent by the base station to the terminal directly arrives at the terminal. If the terminal accesses the false base station, the first device is the false base station, a downlink AS message sent by the base station to the terminal first arrives at the false base station, and the false base station then sends the downlink AS message to the terminal.

Similarly, if the terminal does not access the false base station, an uplink AS message sent by the terminal to the base station directly arrives at the base station; if the terminal accesses the false base station, an uplink AS message sent by the terminal to the base station first arrives at the false base station, and the false base station then sends the uplink AS message to the base station.

Step 26: The terminal receives the first downlink AS message, calculates a second hash value based on received second system information, and sends a first uplink AS message that is integrity protected, where the first uplink AS message includes the second hash value of the second system information. For example, the first uplink AS message is an AS security mode complete (AS security mode complete) message.

Step 27: The base station receives the first uplink AS message that is integrity protected, where the first uplink AS message includes the identifier of the first device, that is, an identifier allocated by the base station to the terminal, and the base station performs integrity verification on the first uplink AS message. If the verification succeeds, the base station determines a first hash value of first system information of a cell corresponding to the identifier of the first device. The base station determines whether the first hash value is the same as the second hash value; and if the first hash value is the same as the second hash value, determines that the terminal does not access the false base station; or if the first hash value is different from the second hash value, determines that the terminal accesses the false base station.

When the base station determines that the terminal accesses the false base station, (optional) step 28: Send a second downlink AS message that is integrity protected to the terminal, where the second downlink AS message includes indication information used to indicate that the terminal accesses the false base station. For example, the indication information used to indicate that the terminal accesses the false base station is the first system information. Certainly, the indication information used to indicate that the terminal accesses the false base station may alternatively be that the terminal accesses the false base station.

Step 29: The terminal receives the second downlink AS message, performs integrity verification on the second downlink AS message, and performs cell reselection based on the first system information in the second downlink AS message after the verification succeeds.

When determining that the terminal accesses the false base station, the base station may further send the first system information to the terminal by using a downlink AS message that is integrity protected, and the terminal may reselect, by using the first system information, a cell to perform access, thereby increasing a possibility of accessing a cell of a real base station.

After determining that the terminal accesses the false base station, the terminal may further report related information of a cell of the false base station to the base station. For example, after receiving the second downlink AS message, the terminal sends a second uplink AS message that is integrity protected to the base station, where the second uplink AS message includes system-related information of a cell accessed by the terminal.

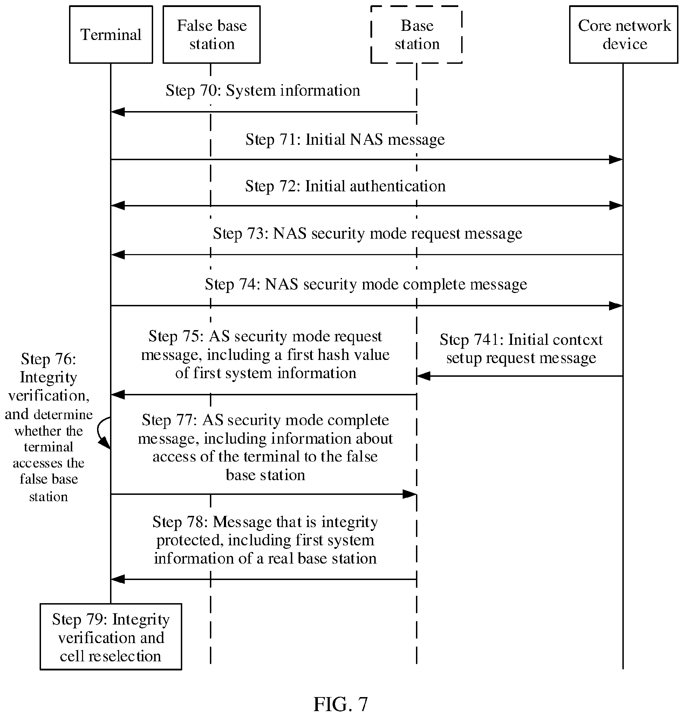

FIG. 2 describes the process in which the base station determines the false base station in the scenario in which the terminal establishes AS security with the base station. As shown in FIG. 7, the following provides a schematic diagram of a process in which a terminal determines a false base station in a scenario in which the terminal establishes AS security with a base station.

Step 70 to step 72 are the same as step 20 to step 22. Repeated parts are not described again.

Step 73: The core network device sends a first downlink NAS message to the terminal. For example, the first downlink NAS message is a NAS security mode command message.

The NAS security mode command message may not include an indication indicating that system information protection is supported.

Step 74: The terminal sends a second uplink NAS message to the core network device. For example, the second uplink NAS message is a NAS security mode complete message. This step is the same as step 24.

Step 741: The core network device receives the second uplink NAS message, and the core network device sends a downlink N2 message to the base station. For example, the downlink N2 message is an initial context setup request message. The N2 message includes an identifier of the terminal, the identifier of the terminal is an identifier of the terminal agreed on between the core network device and the base station, and the identifier of the terminal is an identifier of the terminal in the second uplink NAS message. This step is the same as step 241.

Step 75: The base station obtains an identifier of a first device based on an identifier of the terminal in an N2 message, obtains a first hash value of first system information of a cell corresponding to the identifier of the first device, and sends a first downlink AS message that is integrity protected, where the first downlink AS message includes the first hash value of the first system information.

For example, the first downlink AS message is the security mode command message.

For example, the first downlink AS message includes time information and/or list information of the first system information.

A process in which the base station obtains the identifier of the first device based on the identifier of the terminal in the N2 message in step 75 is the same as the process in which the base station obtains the identifier of the first device based on the identifier of the terminal in the N2 message in step 25. Repeated parts are not described again.

A process in which the base station obtains the first hash value of the first system information of the cell corresponding to the identifier of the first device in step 75 is the same as the process in which the base station obtains the first hash value in step 43. Repeated parts are not described again.

The AS security mode command message may not include the indication indicating that the system information protection is supported.

Step 76: The terminal receives the first downlink AS message that is integrity protected, performs integrity verification on the first downlink AS message, and determines, based on the first hash value of the first system information, whether the terminal accesses the false base station if the verification succeeds.

A process in which the terminal performs the integrity verification on the first downlink AS message in step 76 is the same as the process in which the terminal performs the integrity verification on the first downlink NAS message in step 36. Repeated parts are not described again.

A process in which the terminal determines, based on the first hash value of the first system information, whether the terminal accesses the false base station in step 76 is the same as the process in which the terminal determines, based on the first hash value of the first system information, whether the terminal accesses the false base station in step 36. Repeated parts are not described again.

In this embodiment of this application, when determining that the terminal accesses the false base station, the terminal may directly reselect a cell to perform access. Alternatively, the terminal may wait for the base station to deliver first system information of a cell of the base station, and perform cell reselection based on the first system information. Alternatively, the terminal may first reselect a cell to perform access, and reselect, based on the first system information, another cell to perform access after receiving the first system information.

The following step 77 to step 79 are optional, and describe a process in which the terminal waits for the base station to deliver the first system information, and performs cell reselection based on the first system information.

Step 77: After determining that the terminal accesses the false base station, the terminal sends a first uplink AS message that is integrity protected to the base station, where the first uplink AS message includes indication information used to indicate that the terminal accesses the false base station.

For example, the first uplink AS message is an AS security mode complete message.

For example, the indication information used to indicate that the terminal accesses the false base station is that the terminal accesses the false base station.

For example, the indication information used to indicate that the terminal accesses the false base station may be system-related information of a cell (a cell of the false base station) accessed by the terminal.

Step 78: The base station performs integrity verification on the first uplink AS message, and sends a second downlink AS message that is integrity protected to the terminal after the verification succeeds, where the second downlink AS message includes the first system information.

For example, the second downlink AS message is an RRC message.

Step 79: The terminal receives the second downlink AS message, performs integrity verification on the second downlink AS message, and performs cell reselection based on the first system information in the second downlink AS message after the verification succeeds.

The base station delivers the first system information to the terminal, and the terminal reselects, based on the first system information, a cell to perform access, so that a possibility of accessing a cell of the false base station next time can be reduced, and a possibility of accessing a cell of a real base station can be increased.

The following describes a process in which a terminal or a target base station determines whether the terminal accesses a false base station in a scenario in which access stratum reestablishment is performed after a radio link failure (radio link failure) occurs on the terminal.

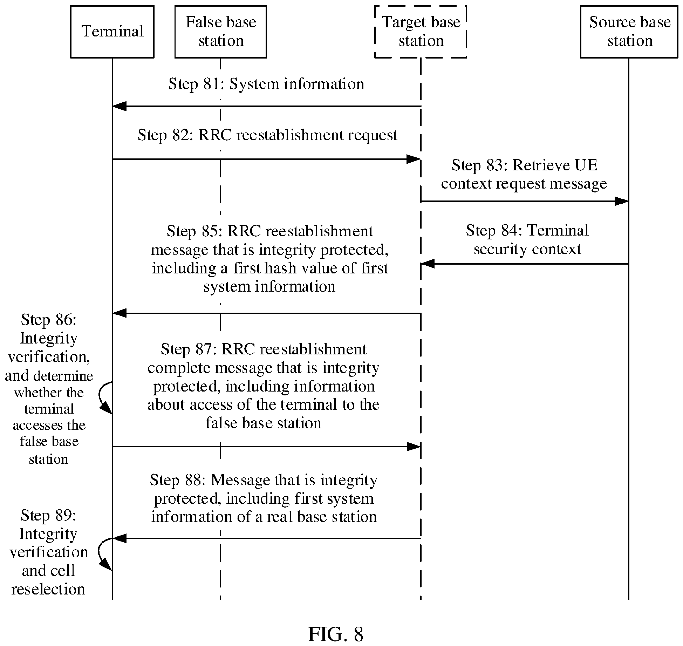

FIG. 8 is a schematic diagram of a false base station determining process.

Step 81: A terminal receives system information.

Step 82: The terminal sends an RRC reestablishment request (RRC reestablishment request) message to a target base station, where the RRC reestablishment request message includes an identifier of a cell, of a source base station, accessed by the terminal and an identifier allocated by the source base station to the terminal.

If the terminal does not access a false base station, the RRC reestablishment request message is directly sent to a real base station; if the terminal accesses a false base station, the RRC reestablishment request message is forwarded by the false base station to a real base station.

(Optional) Step 83: The target base station sends a retrieve UE context request (retrieve UE context request) message to the source base station, where the retrieve UE context request message includes the identifier allocated by the source base station to the terminal.

The target base station determines the source base station based on the identifier, included in the RRC reestablishment request, of the cell, of the source base station, accessed by the terminal.

(Optional) Step 84: The source base station sends a UE context response (UE context response) message to the target base station, where the UE context response message includes the identifier allocated by the source base station to the terminal, that is, an identifier of a first device and a terminal security context.

Step 85: The target base station obtains a first hash value of first system information of a cell corresponding to the identifier of the first device, and sends a first downlink AS message that is integrity protected, where the first downlink AS message includes the first hash value of the first system information.

For example, the first downlink AS message is an RRC reestablishment (RRC reestablishment) message.

A process in which the target base station obtains the first hash value of the first system information of the cell corresponding to the identifier of the first device in step 85 is the same as the process in which the base station obtains the first hash value in step 43. Repeated parts are not described again.

Step 86: The terminal receives the first downlink AS message that is integrity protected, performs integrity verification on the first downlink AS message, and determines, based on the first hash value of the first system information, whether the terminal accesses the false base station if the verification succeeds. This step is the same as step 76.

In this embodiment of this application, when determining that the terminal accesses the false base station, the terminal may directly reselect a cell to perform access. Alternatively, the terminal may wait for the target base station to deliver first system information of a cell of the target base station, and perform cell reselection based on the first system information. Alternatively, the terminal may first reselect a cell to perform access, and reselect, based on the first system information, another cell to perform access after receiving the first system information.

The following step 87 to step 89 are optional, and describe a process in which the terminal waits for the target base station to deliver the first system information, and performs cell reselection based on the first system information.

Step 87: After determining that the terminal accesses the false base station, the terminal sends a first uplink AS message that is integrity protected to the target base station, where the first uplink AS message includes indication information used to indicate that the terminal accesses the false base station.

For example, the first uplink AS message is an RRC reestablishment complete (RRC reestablishment complete) message.

For example, the indication information used to indicate that the terminal accesses the false base station is that the terminal accesses the false base station.

For example, the indication information used to indicate that the terminal accesses the false base station is system-related information of a cell (a cell of the false base station) accessed by the terminal.

Step 88: The target base station performs integrity verification on the first uplink AS message, and sends a second downlink AS message that is integrity protected to the terminal after the verification succeeds, where the second downlink AS message includes the first system information.

For example, the second downlink AS message is an RRC message.

Step 89: The terminal receives the second downlink AS message, performs integrity verification on the second downlink AS message, and performs cell reselection based on the first system information in the second downlink AS message after the verification succeeds.

The base station delivers the first system information to the terminal, and the terminal reselects, based on the first system information, a cell to perform access, so that a possibility of accessing a cell of a false base station next time can be reduced, and a possibility of accessing a cell of a real base station can be increased.

In a possible implementation, the terminal may report a second hash value of second system information to the base station, and the base station determines whether the terminal accesses the false base station. A specific process is as follows:

The terminal receives system information, and sends an RRC reestablishment request message to the target base station.

The target base station sends a first downlink AS message that is integrity protected, that is, an RRC reestablishment message to the terminal, where the RRC reestablishment message may include a system information protection indication.

After receiving the first downlink AS message, that is, the RRC reestablishment message, the terminal may calculate a second hash value of second system information of a cell currently accessed by the terminal. The terminal sends a first uplink AS message that is integrity protected, that is, an RRC reestablishment complete message, where the RRC reestablishment complete message includes the second hash value of the second system information.

For example, the first uplink AS message includes time information and/or list information of the second system information. A function of the time information and/or the list information of the second system information is described in the foregoing embodiment, and details are not described herein again.

After receiving the first uplink AS message, that is, the RRC reestablishment complete message, the base station may verify the first uplink AS message, calculates a first hash value of first system information after the verification succeeds, and compares the first hash value with the second hash value. If the base station determines that the terminal accesses a false base station, the base station sends a second downlink AS message that is integrity protected to the terminal, where the second downlink AS message includes indication information used to indicate that the terminal accesses the false base station. The indication information may be that the terminal accesses the false base station, or may be the first system information. Further, the terminal receives the second downlink AS message, performs integrity verification on the second downlink AS message, and performs cell reselection based on the indication information that is used to indicate that the terminal accesses the false base station and that is in the second downlink AS message after the verification succeeds.

The following describes a process in which a terminal or a base station determines whether the terminal accesses a false base station in a scenario in which the terminal in an inactive state resumes a link.

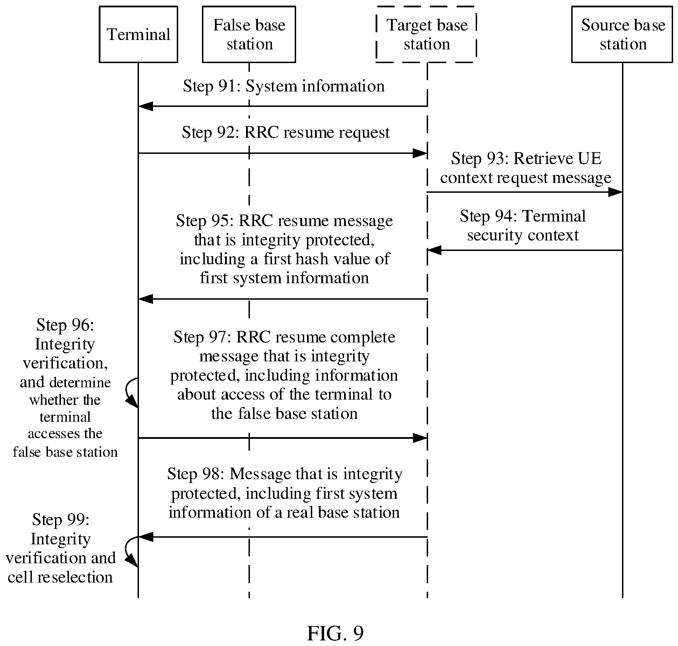

FIG. 9 is a schematic diagram of a false base station determining process.

Step 91: A terminal receives system information.

Step 92: The terminal sends an RRC resume request (RRC resume request) message to a target base station, where the RRC resume request message includes an identifier of a cell, of a source base station, accessed by the terminal and an identifier allocated by the source base station to the terminal.

If the terminal does not access a false base station, the RRC resume request message is directly sent to a real base station; if the terminal accesses a false base station, the RRC resume request message is forwarded by the false base station to a real base station.

(Optional) Step 93: The target base station sends a retrieve UE context request (retrieve UE context request) message to the source base station, where the retrieve UE context request message includes the identifier allocated by the source base station to the terminal.

(Optional) Step 94: The source base station sends a UE context response (UE context response) message to the target base station, where the UE context response message includes the identifier allocated by the source base station to the terminal, that is, an identifier of a first device.

Step 95: The target base station obtains a first hash value of first system information of a cell corresponding to the identifier of the first device, and sends a first downlink AS message that is integrity protected, where the first downlink AS message includes the first hash value of the first system information.

For example, the first downlink AS message is an RRC resume (RRC resume) message.

For a process in which the target base station obtains the first hash value of the first system information of the cell corresponding to the identifier of the first device in step 95, refer to the descriptions in the foregoing embodiment.

Step 96: The terminal receives the first downlink AS message that is integrity protected, performs integrity verification on the first downlink AS message, and determines, based on the first hash value of the first system information, whether the terminal accesses the false base station if the verification succeeds. This step is the same as step 76.

In this embodiment of this application, when determining that the terminal accesses the false base station, the terminal may directly reselect a cell to perform access. Alternatively, the terminal may wait for the target base station to deliver first system information of a cell of the target base station, and perform cell reselection based on the first system information. Alternatively, the terminal may first reselect a cell to perform access, and reselect, based on the first system information, another cell to perform access after receiving the first system information.

The following step 97 to step 99 are optional, and describe a process in which the terminal waits for the target base station to deliver the first system information, and performs cell reselection based on the first system information.

Step 97: After determining that the terminal accesses the false base station, the terminal sends a first uplink AS message that is integrity protected to the target base station, where the first uplink AS message includes indication information used to indicate that the terminal accesses the false base station.

For example, the first uplink AS message is an RRC resume complete (RRC resume complete) message.

For example, the indication information used to indicate that the terminal accesses the false base station is that the terminal accesses the false base station.

For example, the indication information used to indicate that the terminal accesses the false base station is system-related information of a cell (a cell of the false base station) accessed by the terminal.

Step 98: The target base station performs integrity verification on the first uplink AS message, and sends a second downlink AS message that is integrity protected to the terminal after the verification succeeds, where the second downlink AS message includes the first system information.

For example, the second downlink AS message is an RRC message.

Step 99: The terminal receives the second downlink AS message, performs integrity verification on the second downlink AS message, and performs cell reselection based on the first system information in the second downlink AS message after the verification succeeds.

In a possible implementation, the terminal may report a second hash value of second system information to the base station, and the base station determines whether the terminal accesses the false base station. A specific process is as follows:

The terminal receives system information, and sends an RRC resume request message to the target base station.

The base station sends a first downlink AS message that is integrity protected, that is, an RRC resume message to the terminal, where the RRC resume message may include a system information protection indication.

After receiving the first downlink AS message, that is, the RRC resume message, the terminal may calculate a second hash value of second system information of a cell currently accessed by the terminal. The terminal sends a first uplink AS message that is integrity protected, that is, an RRC resume complete message, where the RRC resume complete message includes the second hash value of the second system information.

For example, the first uplink AS message includes time information and/or list information of the second system information. A function of the time information and/or the list information of the second system information is described in the foregoing embodiment, and details are not described herein again.

After receiving the first uplink AS message, that is, the RRC resume complete message, the base station may verify the first uplink AS message, calculates a first hash value of first system information after the verification succeeds, and compares the first hash value with the second hash value. If the base station determines that the terminal accesses a false base station, the base station sends a second downlink AS message that is integrity protected to the terminal, where the second downlink AS message includes indication information used to indicate that the terminal accesses the false base station. The indication information may be that the terminal accesses the false base station, or may be the first system information. Further, the terminal receives the second downlink AS message, performs integrity verification on the second downlink AS message, and performs cell reselection based on the first system information in the second downlink AS message after the verification succeeds.

The following describes a process in which a terminal or a master base station determines whether a secondary base station is a false base station when the terminal is in a dual connectivity scenario.

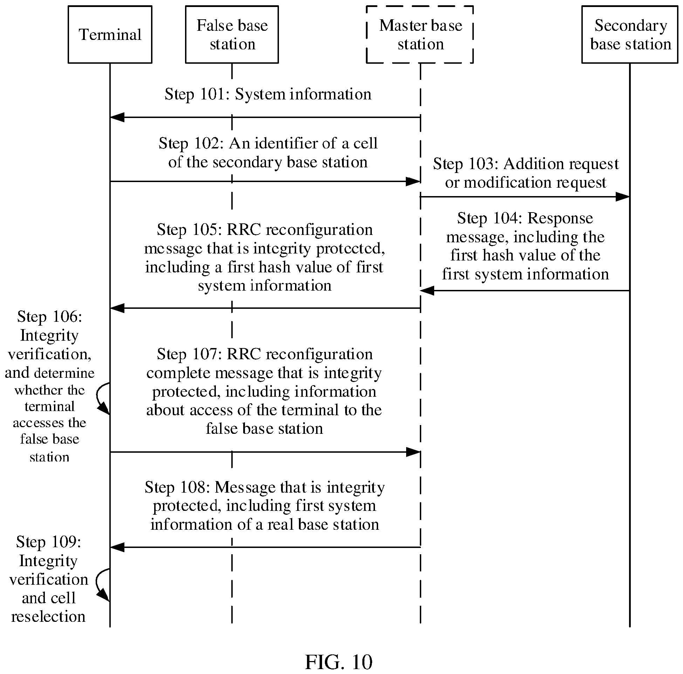

FIG. 10 is a schematic diagram of a false base station determining process.

Step 101: A terminal receives system information.

Step 102: The terminal sends, to a master base station, an identifier of a cell of a secondary base station in which the terminal is located and an identifier allocated by the secondary base station to the terminal.

Step 103: The master base station sends a request message to the secondary base station, where the request message includes the identifier allocated by the secondary base station to the terminal, that is, an identifier of a first device.

For example, the request message is an addition request (SN addition request) message or a modification request (modification request) message.

The master base station may determine the secondary base station based on the identifier of the cell of the secondary base station.

Step 104: The secondary base station receives the identifier of the first device sent by the master base station, obtains a first hash value of first system information of a cell corresponding to the identifier of the first device, and sends a response message of the request message to the master base station, where the response message includes the first hash value of the first system information and the identifier of the first device.

For example, the response message is an acknowledgment message of the addition request message or an acknowledgment message of the modification request message.

Step 105: After receiving the response message, the master base station sends a first downlink AS message that is integrity protected, where the first downlink AS message includes the first hash value of the first system information.

For example, the first downlink AS message is an RRC reconfiguration (RRC reconfiguration) message.

Step 106: The terminal receives the first downlink AS message that is integrity protected, performs integrity verification on the first downlink AS message, and determines, based on the first hash value of the first system information, whether the terminal accesses a false base station if the verification succeeds. This step is the same as step 76.

In this embodiment of this application, when determining that the terminal accesses the false base station, the terminal may directly reselect a cell to perform access. Alternatively, the terminal may wait for the master base station to deliver first system information of a cell of the secondary base station, and perform cell reselection based on the first system information. Alternatively, the terminal may first reselect a cell to perform access, and reselect, based on the first system information, another cell to perform access after receiving the first system information.

The following step 107 to step 109 are optional, and describe a process in which the terminal waits for the master base station to deliver the first system information of the secondary base station, and performs cell reselection based on the first system information.

Step 107: After determining that the terminal accesses the false base station, the terminal sends a first uplink AS message that is integrity protected to the master base station, where the first uplink AS message includes indication information used to indicate that the terminal accesses the false base station.

For example, the first uplink AS message is an RRC resume reconfiguration (RRC resume reconfiguration) message.

For example, the indication information used to indicate that the terminal accesses the false base station is that the terminal accesses the false base station.

For example, the indication information used to indicate that the terminal accesses the false base station is system-related information of a cell (a cell of the false base station) accessed by the terminal.

Step 108: The master base station performs integrity verification on the first uplink AS message, and sends a second downlink AS message that is integrity protected to the terminal after the verification succeeds, where the second downlink AS message includes the first system information.

For example, the second downlink AS message is an RRC message.

Step 109: The terminal receives the second downlink AS message, performs integrity verification on the second downlink AS message, and performs cell reselection based on the first system information in the second downlink AS message after the verification succeeds.

In a possible implementation, the terminal may report a second hash value of second system information to the master base station, and the master base station determines whether a secondary base station accessed by the terminal is a false base station. A specific process is as follows:

The terminal receives system information, and sends an RRC resume request message to the master base station, where the RRC resume request message includes an identifier of a cell of a secondary base station in which the terminal is located and an identifier allocated by the secondary base station to the terminal.

The master base station sends a request message to the secondary base station, where the request includes the identifier allocated by the secondary base station to the terminal, that is, an identifier of a first device.

The secondary base station receives the identifier of the first device sent by the master base station, obtains a first hash value of first system information of a cell corresponding to the identifier of the first device, and sends a response message of the request message to the master base station, where the response message includes the first hash value of the first system information and the identifier of the first device. Alternatively, the secondary base station obtains first system information of a cell corresponding to the identifier of the first device, and sends the first system information to the master base station, so that the master base station calculates a first hash value of the first system information.

The master base station sends a first downlink AS message that is integrity protected, that is, an RRC reconfiguration message to the terminal, where the RRC reconfiguration message may include a system information protection indication.

After receiving the first downlink AS message, that is, verifying the RRC reconfiguration message, the terminal may calculate a second hash value of second system information of a currently accessed cell. The terminal sends a first uplink AS message that is integrity protected, that is, an RRC reconfiguration complete message, where the RRC reconfiguration complete message includes the second hash value of the second system information.

For example, the first uplink AS message includes time information and/or list information of the second system information. A function of the time information and/or the list information of the second system information is described in the foregoing embodiment, and details are not described herein again.

After receiving the first uplink AS message, that is, the RRC reconfiguration complete message, the master base station may verify the first uplink AS message, determine the first hash value after the verification succeeds, and compare the first hash value with the second hash value. If the master base station determines that the terminal accesses a false base station, the master base station sends a second downlink AS message that is integrity protected to the terminal, where the second downlink AS message includes indication information used to indicate that the terminal accesses the false base station. The indication information may be that the terminal accesses the false base station, or may be the first system information. Further, the terminal receives the second downlink AS message, performs integrity verification on the second downlink AS message, and performs cell reselection based on the indication information that is used to indicate that the terminal accesses the false base station and that is in the second downlink AS message after the verification succeeds.

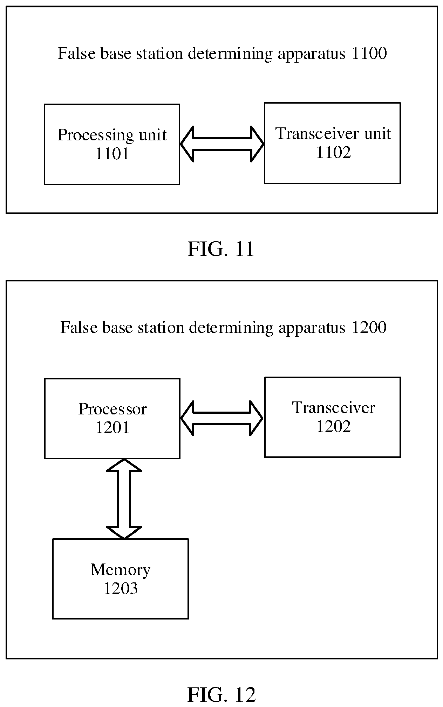

Based on a same inventive concept as that of the foregoing false base station determining method, as shown in FIG. 11, an embodiment of this application further provides a false base station determining apparatus 1200. The false base station determining apparatus 1200 is configured to perform the operation performed by the terminal, the real base station, or the core network device in FIG. 3 to FIG. 10 in the foregoing false base station determining method, and the false base station determining apparatus 1100 includes a processing unit 1101 and a transceiver unit 1102.

When the false base station determining apparatus 1200 performs the operation performed by the terminal, the transceiver unit 1102 is configured to receive second system information, or send an uplink AS message and receive a downlink AS message, or send an uplink NAS message, or receive a downlink NAS message. The processing unit 1101 is configured to calculate a second hash value of the second system information.

When the false base station determining apparatus 1200 performs the operation performed by the real base station, the transceiver unit 1102 is configured to send first system information or a first hash value of first system information, or send an uplink N2 message and receive a downlink N2 message, or receive an uplink NAS message and send the uplink NAS message, or receive a downlink NAS message and send the downlink NAS message, or receive an uplink AS message and send a downlink AS message. The processing unit 1101 is configured to calculate the first hash value of the first system information.

When the false base station determining apparatus 1200 performs the operation performed by the core network device, the transceiver unit 1102 is configured to send a downlink N2 message and receive an uplink N2 message, or receive an uplink NAS message and send a downlink NAS message. The processing unit 1101 is configured to calculate a first hash value of first system information.

Based on a same inventive concept as that of the foregoing false base station determining method, as shown in FIG. 12, an embodiment of this application further provides a false base station determining apparatus 1200. The false base station determining apparatus 1200 is configured to perform the operation performed by the terminal, the real base station, or the core network device in the foregoing false base station determining method. The base station may be a target base station, a source base station, a master base station, and a secondary base station. The false base station determining apparatus 1200 includes a processor 1201 and a transceiver 1202, and optionally, further includes a memory 1203. The processor 1201 is configured to invoke a group of programs, and when the program is executed, the processor 1201 is enabled to perform the operation performed by the terminal, the real base station, or the core network device in the foregoing false base station determining method. The memory 1203 is configured to store the program executed by the processor 1201. The processing unit 1101 in FIG. 11 may be implemented by using the processor 1201, and the transceiver unit 1102 may be implemented by using the transceiver 1202.

The processor may be a central processing unit (central processing unit, CPU), a network processor (network processor, NP), or a combination of a CPU and an NP.

The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

It should further be understood that the memory in this embodiment of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application is intended to include but is not limited to these memories and any memory of another proper type.

An embodiment of this application provides a computer storage medium. The computer storage medium stores a computer program, and the computer program includes a false base station determining method.

An embodiment of this application provides a computer program product including instructions. When the computer program product runs on a computer, the computer is enabled to perform the foregoing false base station determining method.

Any false base station determining apparatus provided in the embodiments of this application may alternatively be a chip.

A false base station determining system is provided in an embodiment of this application, including a base station and a core network device.

The base station is configured to: receive a first uplink NAS message and an identifier of a first device, obtain a hash value of first system information of a cell corresponding to the identifier of the first device, and send an N2 message to the core network device, where the N2 message includes the first uplink NAS message and the hash value of the first system information.

The core network device is configured to: send a first downlink NAS message that is integrity protected after receiving the N2 message, where the first downlink NAS message includes the hash value of the first system information.

In a possible implementation, the system further includes a terminal.

The terminal is configured to: receive the first downlink NAS message, and after integrity verification on the first downlink NAS message succeeds, determine, based on the hash value of the first system information, whether the terminal accesses a false base station.

In a possible implementation, that the terminal is configured to determine, based on the hash value of the first system information, whether the terminal accesses a false base station is specifically:
determining a hash value of second system information of a cell accessed by the terminal;
determining whether the hash value of the first system information is consistent with the hash value of the second system information; and
if the hash value of the first system information is consistent with the hash value of the second system information, determining that the terminal does not access the false base station; or if the hash value of the first system information is inconsistent with the hash value of the second system information, determining that the terminal accesses the false base station.

In a possible implementation, the terminal is further configured to: when determining that the terminal accesses the false base station, send a second uplink NAS message that is integrity protected to the core network device, where the second uplink NAS message includes system-related information of the cell accessed by the terminal.

In a possible implementation, the system-related information includes second system information of the cell accessed by the terminal or a hash value of second system information of the cell accessed by the terminal.

In a possible implementation, when determining that the terminal accesses the false base station, the terminal reselects a cell to perform access.

In a possible implementation, when the terminal accesses the false base station, the identifier of the first device is an identifier allocated by the base station to the false base station; or when the terminal does not access the false base station, the identifier of the first device is an identifier allocated by the base station to the terminal.

A false base station determining system is provided in an embodiment of this application, including a base station and a core network device.

The base station is configured to: receive a first uplink NAS message and an identifier of a first device, obtain first system information of a cell corresponding to the identifier of the first device, and send an N2 message to the core network device, where the N2 message includes the first uplink NAS message and the first system information.

The core network device is configured to: calculate a hash value of the first system information after receiving the N2 message, and send a first downlink NAS message that is integrity protected, where the first downlink NAS message includes the hash value of the first system information.

A false base station determining system is provided in an embodiment of this application, including a base station and a core network device.

The base station is configured to: receive a first uplink NAS message that is integrity protected and an identifier of a first device, obtain a hash value of first system information of a cell corresponding to the identifier of the first device, and send an N2 message to the core network device, where the N2 message includes the first uplink NAS message and the hash value of the first system information, and the first uplink NAS message includes a hash value of second system information of a cell accessed by a terminal.

The core network device is configured to: determine whether the hash value of the first system information is consistent with the hash value of the second system information after receiving the N2 message; and if the hash value of the first system information is consistent with the hash value of the second system information, determine that the terminal does not access a false base station; or if the hash value of the first system information is inconsistent with the hash value of the second system information, determine that the terminal accesses a false base station.

In a possible implementation, the core network device is further configured to: when determining that the terminal accesses the false base station, send a first downlink NAS message that is integrity protected to the terminal, where the first downlink NAS message includes indication information used to indicate that the terminal accesses the false base station.

The terminal is further configured to: receive the first downlink NAS message, and after integrity verification on the first downlink NAS message succeeds, reselect, based on the first system information, a cell to perform access.

In a possible implementation, the indication information used to indicate that the terminal accesses the false base station is the first system information.

The core network device is further configured to: when determining that the terminal accesses the false base station, send a system information obtaining request to the base station, where the system information obtaining request includes indication information used to indicate to obtain the first system information.

The base station is further configured to: receive the system information obtaining request sent by the core network device, obtain, based on the indication information used to indicate to obtain the first system information, first system information corresponding to the hash value of the first system information, and send the first system information to the core network device.

The core network device is further configured to send the first downlink NAS message that is integrity protected, where the first downlink NAS message includes the first system information.

A false base station determining system is provided in an embodiment of this application, including a base station and a core network device.

The base station is configured to: receive a first uplink NAS message that is integrity protected and an identifier of a first device, obtain first system information of a cell corresponding to the identifier of the first device, and send an N2 message to the core network device, where the N2 message includes the first uplink NAS message and the first system information, and the first uplink NAS message includes a hash value of second system information of a cell accessed by a terminal.

The core network device is configured to: calculate a first hash value of the first system information after receiving the N2 message; determine whether the hash value of the first system information is consistent with the hash value of the second system information; and if the hash value of the first system information is consistent with the hash value of the second system information, determine that the terminal does not access a false base station; or if the hash value of the first system information is inconsistent with the hash value of the second system information, determine that the terminal accesses a false base station.

In a possible implementation, the core network device is further configured to: when determining that the terminal accesses the false base station, send a first downlink NAS message that is integrity protected, where the first downlink NAS message includes indication information used to indicate that the terminal accesses the false base station.

The terminal is further configured to: receive the first downlink NAS message, and after integrity verification on the first downlink NAS message succeeds, reselect, based on the indication information used to indicate that the terminal accesses the false base station, a cell to perform access.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of the process and/or the block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specified function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specified function in one or more processes in the flowcharts and/or in one or more blocks in the block diagrams.

Although some preferred embodiments of this application have been described, a person skilled in the art can make changes and modifications to these embodiments once the person learns the basic inventive concept. Therefore, the following claims are intended to be construed as to cover the preferred embodiments and all changes and modifications falling within the scope of this application.

It is clearly that a person skilled in the art can make various modifications and variations to the embodiments of this application without departing from the spirit and scope of the embodiments of this application. In this way, this application is intended to cover these modifications and variations of the embodiments of this application provided that they fall within the scope of the claims of this application and their equivalent technologies.

## Claims

1. A false base station determining system, comprising a base station and a core network device, wherein
the base station is configured to: receive a first uplink NAS message and an identifier of a first device, obtain a hash value of first system information of a cell corresponding to the identifier of the first device, and send an N2 message to the core network device, wherein the N2 message comprises the first uplink NAS message and the hash value of the first system information; and
the core network device is configured to: send a first downlink NAS message that is integrity protected after receiving the N2 message, wherein the first downlink NAS message comprises the hash value of the first system information.

2. The system according to claim 1, further comprising a terminal, wherein
the terminal is configured to: receive the first downlink NAS message, and after integrity verification on the first downlink NAS message succeeds, determine, based on the hash value of the first system information, whether the terminal accesses a false base station.

3. The system according to claim 2, wherein that the terminal is configured to determine, based on the hash value of the first system information, whether the terminal accesses a false base station is specifically:
determining a hash value of second system information of a cell accessed by the terminal;
determining whether the hash value of the first system information is consistent with the hash value of the second system information; and
if the hash value of the first system information is consistent with the hash value of the second system information, determining that the terminal does not access the false base station; or if the hash value of the first system information is inconsistent with the hash value of the second system information, determining that the terminal accesses the false base station.

4. The system according to claim 2 or 3, wherein the terminal is further configured to: when determining that the terminal accesses the false base station, send a second uplink NAS message that is integrity protected to the core network device, wherein the second uplink NAS message comprises system-related information of the cell accessed by the terminal.

5. The system according to claim 4, wherein the system-related information comprises the second system information of the cell accessed by the terminal or the hash value of the second system information of the cell accessed by the terminal.

6. The system according to any one of claims 2 to 5, wherein the terminal is further configured to: when determining that the terminal accesses the false base station, reselect a cell to perform access.

7. The system according to any one of claims 2 to 6, wherein when the terminal accesses the false base station, the identifier of the first device is an identifier allocated by the base station to the false base station; or when the terminal does not access the false base station, the identifier of the first device is an identifier allocated by the base station to the terminal.

8. The system according to any one of claims 2 to 7, wherein the first uplink NAS message is a NAS registration request message or a NAS service request message.

9. The system according to any one of claims 2 to 8, wherein the first downlink NAS message is a NAS security mode command message, or any downlink NAS message that is integrity protected after NAS security activation.

10. A false base station determining method, comprising:
sending, by a terminal, a first uplink NAS message; and
receiving, by the terminal, a first downlink NAS message that is integrity protected, wherein the first downlink NAS message comprises a hash value of first system information; and after integrity verification on the first downlink NAS message succeeds, determining, based on the hash value of the first system information, whether the terminal accesses a false base station.

11. The method according to claim 10, wherein the determining, based on the hash value of the first system information, whether the terminal accesses a false base station comprises:
determining, by the terminal, a hash value of second system information of a cell accessed by the terminal;
determining whether the hash value of the first system information is consistent with the hash value of the second system information; and
if the hash value of the first system information is consistent with the hash value of the second system information, determining that the terminal does not access the false base station; or if the hash value of the first system information is inconsistent with the hash value of the second system information, determining that the terminal accesses the false base station.

12. The method according to claim 11, wherein after the determining, by the terminal, that the terminal accesses the false base station, the method further comprises:
sending, by the terminal, a second uplink NAS message that is integrity protected to a core network device, wherein the second uplink NAS message comprises system-related information of the cell accessed by the terminal.

13. The method according to claim 12, wherein the system-related information comprises the second system information of the cell accessed by the terminal or the hash value of the second system information of the cell accessed by the terminal.

14. The method according to claim 12, further comprising:
receiving, by the terminal, a second downlink NAS message that is integrity protected and that is sent by the core network device, wherein the second downlink NAS message comprises the first system information.

15. The method according to any one of claims 11 to 14, wherein during the determining, by the terminal, that the terminal accesses the false base station, the method further comprises:
reselecting a cell to perform access.

16. The method according to claim 10, wherein the first uplink NAS message is a NAS service request message or a NAS registration request message.

17. The method according to claim 10, wherein the first downlink NAS message is a NAS security mode command message, or any downlink NAS message that is integrity protected after NAS security activation.

18. A false base station determining method, comprising:
receiving, by a base station, a first uplink NAS message and an identifier of a first device;
obtaining, by the base station, a hash value of first system information of a cell corresponding to the identifier of the first device, and sending an N2 message to a core network device, wherein the N2 message comprises the first uplink NAS message and the hash value of the first system information; and
receiving, by the base station, a first downlink NAS message that is integrity protected and that is sent by the core network device, and sending the first downlink NAS message to the first device, wherein the first downlink NAS message comprises the hash value of the first system information.

19. The method according to claim 18, wherein when a terminal accesses a false base station, the identifier of the first device is an identifier of the false base station; or when a terminal does not access a false base station, the identifier of the first device is an identifier of the terminal.

20. The method according to claim 18, further comprising:
receiving, by the base station, a system information obtaining request sent by the core network device, wherein the system information obtaining request comprises indication information used to indicate to obtain the first system information; obtaining, by the base station, the first system information based on the indication information used to indicate to obtain the first system information; and sending the first system information to the core network device.

21. A false base station determining method, comprising:
receiving, by a core network device, an N2 message sent by a base station, wherein the N2 message comprises a first uplink NAS message and a hash value of first system information; and
sending, by the core network device, a first downlink NAS message that is integrity protected, wherein the first downlink NAS message comprises the hash value of the first system information.

22. The method according to claim 21, further comprising:
receiving, by the core network device, a second uplink NAS message that is integrity protected and that is from a terminal, wherein the second uplink NAS message comprises system-related information of a cell accessed by the terminal.

23. The method according to claim 22, wherein the system-related information comprises second system information of the cell accessed by the terminal or a hash value of second system information of the cell accessed by the terminal.

24. The method according to claim 22, further comprising:
sending, by the core network device, a system information obtaining request to the base station, wherein the system information obtaining request comprises indication information used to indicate to obtain the first system information, and receiving the first system information sent by the base station; and
sending, by the core network device, a second downlink NAS message that is integrity protected, wherein the second downlink NAS message comprises the first system information.

25. A false base station determining system, comprising a base station and a core network device, wherein
the base station is configured to: receive a first uplink NAS message and an identifier of a first device, obtain first system information of a cell corresponding to the identifier of the first device, and send an N2 message to the core network device, wherein the N2 message comprises the first uplink NAS message and the first system information; and
the core network device is configured to: calculate a hash value of the first system information after receiving the N2 message, and send a first downlink NAS message that is integrity protected, wherein the first downlink NAS message comprises the hash value of the first system information.

26. The system according to claim 25, further comprising a terminal, wherein
the terminal is configured to: receive the first downlink NAS message, and after integrity verification on the first downlink NAS message succeeds, determine, based on the hash value of the first system information, whether the terminal accesses a false base station.

27. The system according to claim 26, wherein that the terminal is configured to determine, based on the hash value of the first system information, whether the terminal accesses a false base station is specifically:
determining a hash value of second system information of a cell accessed by the terminal;
determining whether the hash value of the first system information is consistent with the hash value of the second system information; and
if the hash value of the first system information is consistent with the hash value of the second system information, determining that the terminal does not access the false base station; or if the hash value of the first system information is inconsistent with the hash value of the second system information, determining that the terminal accesses the false base station.

28. The system according to claim 26 or 27, wherein the terminal is further configured to: when determining that the terminal accesses the false base station, send a second uplink NAS message that is integrity protected to the core network device, wherein the second uplink NAS message comprises system-related information of the cell accessed by the terminal.

29. The system according to claim 28, wherein the system-related information comprises the second system information of the cell accessed by the terminal or the hash value of the second system information of the cell accessed by the terminal.

30. The system according to any one of claims 26 to 29, wherein the terminal is further configured to: when determining that the terminal accesses the false base station, reselect a cell to perform access.

31. A false base station determining method, comprising:
receiving, by a base station, a first uplink NAS message and an identifier of a first device;
obtaining, by the base station, first system information of a cell corresponding to the identifier of the first device, and sending an N2 message to a core network device, wherein the N2 message comprises the first uplink NAS message and the first system information; and
receiving, by the base station, a first downlink NAS message that is integrity protected and that is sent by the core network device, and sending the first downlink NAS message to the first device, wherein the first downlink NAS message comprises the hash value of the first system information.

32. The method according to claim 31, wherein when a terminal accesses a false base station, the identifier of the first device is an identifier of the false base station; or when a terminal does not access a false base station, the identifier of the first device is an identifier of the terminal.

33. A false base station determining method, comprising:
receiving, by a core network device, an N2 message sent by a base station, wherein the N2 message comprises a first uplink NAS message and first system information; and
calculating, by the core network device, a first hash value of the first system information, and sending a first downlink NAS message that is integrity protected, wherein the first downlink NAS message comprises the hash value of the first system information.

34. The method according to claim 33, further comprising:
receiving, by the core network device, a second uplink NAS message that is integrity protected and that is from a terminal, wherein the second uplink NAS message comprises system-related information of a cell accessed by the terminal.

35. A false base station determining apparatus, comprising a transceiver and a processor, wherein
the transceiver is configured to receive and send a message; and
the processor is configured to execute a group of programs, and when the program is executed, the apparatus performs, by using the processor, the method according to any one of claims 10 to 24 or the method according to any one of claims 31 to 34.

36. A computer-readable storage medium, wherein the computer storage medium stores computer-readable instructions, and when a computer reads and executes the computer-readable instructions, the computer is enabled to perform the method according to any one of claims 10 to 24 or the method according to any one of claims 31 to 34.

37. A computer program product, wherein when a computer reads and executes the computer program product, the computer is enabled to perform the method according to any one of claims 10 to 24 or the method according to any one of claims 31 to 34.

38. A chip, wherein the chip is coupled to a memory, and is configured to read and execute a software program stored in the memory, to implement the method according to any one of claims 10 to 24 or the method according to any one of claims 31 to 34.

39. A communications apparatus, configured to implement the method according to any one of claims 10 to 24 or the method according to claims 31 to 34.
